(19) Europäisches Patentamt
European Patent Office
Office européen des brevets

(11) EP 4 592 743 A1

(12) **EUROPEAN PATENT APPLICATION**
published in accordance with Art. 153(4) EPC

(43) Date of publication:
**30.07.2025 Bulletin 2025/31**

(21) Application number: **23868662.0**

(22) Date of filing: **22.09.2023**

(51) International Patent Classification (IPC):
***G02F 1/1337*** *(2006.01)* ***G02F 1/13363*** *(2006.01)*
***G02B 5/18*** *(2006.01)* ***G02F 1/13*** *(2006.01)*
***C09K 19/38*** *(2006.01)* ***C09K 19/42*** *(2006.01)*
***G02B 27/01*** *(2006.01)*

(52) Cooperative Patent Classification (CPC):
**C09K 19/38; C09K 19/42; G02B 5/18; G02B 27/01; G02F 1/13; G02F 1/13363; G02F 1/1337**

(86) International application number:
**PCT/KR2023/014543**

(87) International publication number:
**WO 2024/063610 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.09.2022 KR 20220120854**

(71) Applicant: **LG Chem, Ltd.**
**Seoul 07336 (KR)**

(72) Inventors:
- **LIM, Eun Jung**
  **Daejeon 34122 (KR)**
- **LEE, Ji Youn**
  **Daejeon 34122 (KR)**
- **LEE, Yeon Keun**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

# (54) OPTICAL FILM

(57) [Summary]

This specification discloses a geometric phase optical element, a manufacturing method thereof, and a use thereof. This specification discloses a geometric phase optical element suppressed to have no or very little wavelength dependence, a manufacturing method thereof, and a use thereof. In this specification, a geometric phase optical element, which has no or little wavelength dependence, by using a liquid crystal compound with a specific structure, controlling the thickness of a liquid crystal layer, and adjusting a manufacturing method, a manufacturing method thereof, and a use thereof are disclosed.

Fig. 8

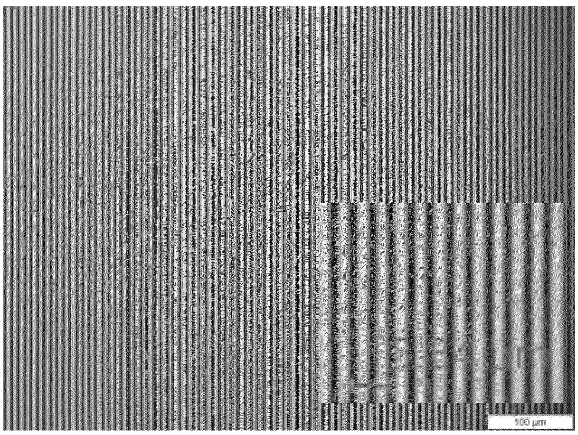


EP 4 592 743 A1

## Description

[Technical Field]

This application claims the benefit of priority based on Korean Patent Application No. 10-2022-0120854 dated September 23, 2022, the disclosure of which is incorporated herein by reference in its entirety.

The present application relates to an optical film and a use thereof.

[Background Art]

Geometric phase optical elements are elements that record wavefronts of light on a recording medium using holographic polarization interference patterns, which are flat optical elements that can be manufactured in a thinner form than existing elements using dynamic phase differences. Such a geometric phase optical element is also called a so-called PBP (Pancharatnam Berry phase) optical element.

Such a geometric phase optical element can be applied to a variety of uses, and its representative use is application to VR (Virtual Reality), AR (Augmented Reality), or MR (Mixed Reality) systems.

For example, the geometric phase optical element may be applied as a part of an optical assembly in an HMD (head-mounted display), which may be a part of the VR, AR, and/or MR system.

The geometric phase optical element may function as geometric phase gratings and/or geometric phase lenses in the system.

When the geometric phase optical element is implemented using a liquid crystal compound (for example, a so-called reactive liquid crystal compound (reactive mesogen)), a problem known to date is that it is very difficult to ensure orientation of the liquid crystal compound. To form a geometric phase optical element, an orientation in which the slow axis of the liquid crystal compound rotates along any one or more directions in the plane is required, and it is very difficult to achieve such an orientation.

Another problem of the geometric phase optical element is that the performance of the optical element is highly wavelength-dependent. When the geometric phase optical element is wavelength-dependent, diffraction angles, refraction angles, or focus distances vary depending on the wavelength of light, which causes various problems including an optical defect known as a CA (chromatic aberration).

A conventional technology to solve such a problem is a multilayer optical element constructed by laminating at least three geometric phase lenses corresponding to the respective wavelengths of RGB (for example, Non-Patent Document 1). In Non-Patent Document 1, the geometric phase lens is implemented using a so-called normal dispersion liquid crystal compound.

If the geometric phase lens can be implemented using a reverse dispersion liquid crystal compound, it is possible to provide a geometric phase optical element solving the problem of wavelength dependence, while having a smaller number of layers, which is optionally a single layer.

However, most known reverse dispersion liquid crystal compounds have poor orientation, so that they do not stably implement complex orientation such as geometric phase orientation.

[Prior Art Documents]

[Non-Patent Document]

(Non-Patent Document 1) Tao Zhan et al., Adv. Optical Mater. 2019, 1901360

[Disclosure]

[Technical Problem]

This specification discloses a geometric phase optical element, a manufacturing method thereof, and a use thereof. This specification discloses a geometric phase optical element suppressed to have no or very little wavelength dependence, a manufacturing method thereof, and a use thereof. In this specification, a geometric phase optical element, which has no or little wavelength dependence, by using a liquid crystal compound with a specific structure, controlling the thickness of a liquid crystal layer, and adjusting a manufacturing method, a manufacturing method thereof, and a use thereof are disclosed.

[Technical Solution]

This specification discloses an optical film.

The optical film comprises a liquid crystal layer. **In** this specification, the liquid crystal layer means a layer containing an oriented liquid crystal compound. For example, the lower limit of the content of the oriented liquid crystal compound in the liquid crystal layer may be 50 weight%, 55 weight%, 60 weight%, 65 weight%, 70 weight%, 75 weight%, 80 weight%, 85 weight%, 90 weight%, or 95 weight% or so, based on the total weight of the liquid crystal layer, and the upper limit may be 100 weight%, 98 weight%, 96 weight%, 94 weight%, 92 weight%, or 90 weight% or so, based on the total weight of the liquid crystal layer. The content may be within a range of more than or equal to, or more than any one of the above-described lower limits; or within a range of less than or equal to, or less than any one of the above-described upper limits while being more than or equal to, or more than any one of the above-described lower limits.

The liquid crystal layer may be a so-called active liquid crystal layer or passive liquid crystal layer. In this specification, the term active liquid crystal layer means a liquid crystal layer in which the orientation of the liquid crystal compound in the liquid crystal layer can be changed by an external action (for example, application of an external electric field) without being fixed, and the term passive liquid crystal layer means a liquid crystal layer in which the orientation of the liquid crystal compound is fixed and does not change by an external action. For example, when a so-called RM (reactive mesogen) is oriented and then the orientation is fixed by polymerization or the like, the passive liquid crystal layer can be formed.

The liquid crystal layer may comprise a so-called T-shaped liquid crystal compound as the liquid crystal compound. As is well known, the term T-shaped liquid crystal compound is a liquid crystal compound in which the mesogen skeleton of the liquid crystal compound is formed in the T shape. The T-shaped liquid crystal compound can have excellent orientation, and in particular, the geometric phase orientation can be effectively achieved.

The lower limit of the content of the T-shaped liquid crystal compound based on the weight of the total liquid crystal compound included in the liquid crystal layer may be 50 weight%, 55 weight%, 60 weight%, 65 weight%, 70 weight%, 75 weight%, 80 weight%, 85 weight%, 90 weight%, or 95 weight% or so, and the upper limit thereof may be 100 weight%, 98 weight%, 96 weight%, 94 weight%, 92 weight%, or 90 weight% or so. The content may be within a range of more than or equal to, or more than any one of the above-described lower limits; or within a range of less than or equal to, or less than any one of the above-described upper limits while being more than or equal to, or more than any one of the above-described lower limits.

As the T-shaped liquid crystal compound, a liquid crystal compound having so-called reverse wavelength dispersion can be used.

In this specification, the reverse wavelength dispersion means a characteristic in which R(450)/R(550) of the liquid crystal compound in Equation A below is within a predetermined range. The R(450)/R(550) in the predetermined range is one identified in a state where the liquid crystal compound is uniaxially oriented, which is evaluated in the manner described in "Test Example 1. Evaluation of R(450)/R(550)" of Example section in this specification.

[Equation A]

$$R(450)/R(550)$$

In Equation A, R(450) is the in-plane phase difference of the liquid crystal compound for a wavelength of 450 nm, and R(550) is the in-plane phase difference of the liquid crystal compound for a wavelength of 550 nm.

In this specification, the term in-plane phase difference is a value determined according to Equation B below.

[Equation B]

$$Rin = d \times (nx - ny)$$

In Equation B, Rin is the planar phase difference, nx and ny are the refractive indexes of the layer formed by the liquid crystal compound in the x-axis direction (slow axis direction) and the y-axis direction (fast axis direction), respectively, and d is the thickness (unit: nm) of the liquid crystal layer.

By substituting nx and ny according to the wavelength into Equation B above, the in-plane phase difference for the desired wavelength can be obtained.

The lower limit of R(450)/R(550) of the liquid crystal compound in Equation A above may be 0.6, 0.61, 0.62, 0.63, 0.64, 0.65, 0.66, 0.67, 0.69, 0.70, 0.71, 0.72, 0.73, 0.74, 0.75, 0.76, 0.77, 0.78, or 0.79 or so, and the upper limit thereof may be 1, 0.99, 0.98, 0.97, 0.96, 0.95, 0.94, 0.93, 0.92, 0.91, 0.90, 0.89, 0.88, 0.87, 0.86, 0.85, 0.84, 0.83, 0.82, 0.81, 0.80, or 0.79 or so. The R(450)/R(550) may be within a range of less than or equal to, or less than any one of the above-described

upper limits; or within a range of less than or equal to, or less than any one of the above-described upper limits while being more than or equal to, or more than any one of the above-described lower limits.

The R(650)/R(550) of the liquid crystal compound may also be adjusted. The R(650) is the in-plane phase difference of the liquid crystal compound for light with a wavelength of 650 nm, and the R(550) is the in-plane phase difference of the liquid crystal compound for light with a wavelength of 550 nm. The method of measuring R(650)/R(550) is basically the same as the method of measuring R(450)/R(550), and only the measurement wavelength needs to be changed. The upper limit of R(650)/R(550) may be 1.19, 1.18, 1.17, 1.16, 1.15, 1.14, 1.13, 1.12, 1.11, 1.1, or 1.08 or so, and the lower limit thereof may be 1, 1.01, 1.02, 1.03, 1.04, 1.05, 1.06, 1.07, 1.08, or 1.09 or so. The R(650)/R(550) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The liquid crystal compound in the liquid crystal layer may be in an oriented state, and such an orientation may be a so-called geometric phase orientation.

In this specification, the term geometric phase orientation means an orientation in which the liquid crystal layer functions as a so-called geometric phase lens or geometric phase grating by the orientation of the liquid crystal compound.

Orientation forms that allow liquid crystal compounds to function as the geometric phase lenses or geometric phase gratings are known.

When the orientation of the liquid crystal compound is an orientation capable of functioning as the geometric phase lens, the relevant orientation may be called a geometric phase lens orientation. In addition, when the orientation of the liquid crystal compound is an orientation capable of functioning as the geometric phase grating, the relevant orientation may be called a geometric phase grating orientation.

The geometric phase lens orientation may generally be defined as an orientation with spatially varying azimuth angles.

Figure 1 is a schematic diagram showing a liquid crystal layer (200) having a geometric phase lens orientation according to one example. The liquid crystal layer (200) generates a corresponding lens profile through an in-plane orientation of the liquid crystal compound. The in-plane orientation of the liquid crystal compound may be defined by an azimuth angle ($\theta$), which generates an optical phase difference T, and the optical phase difference T may be defined by the azimuth angle as $2\theta$.

Figure 2 is one example of the geometric phase lens orientation (210). In the geometric phase lens orientation, the azimuth angle ($\theta$) of the liquid crystal compound changes continuously along the direction from the center (220) of the liquid crystal layer (200) toward the edge (230), thereby generating a changing pitch (A). Here, the pitch (A) means the distance required for the azimuth angle of the liquid crystal compound to rotate 180 degrees in the initial state, which may appear as a function according to the distance (r) from the center (220) in the orientation of the geometric phase lens.

In one example, the azimuth angle may satisfy the relationship of Equation 9 below according to the distance.

[Equation 9]

$$\theta(r) = \{\pi\times r^2\}/\{2\times f\times\lambda\}$$

In Equation 9, $\theta(r)$ is the azimuth angle of the liquid crystal compound in a region of the liquid crystal layer separated by a distance r (unit: mm) from the center of the geometric phase lens orientation, r is the distance, f is the focal length of the geometric phase lens orientation, and $\lambda$ is the wavelength of incident light.

Figure 3 is a diagram illustratively showing the orientation (240) of the liquid crystal compound along the y-axis of the liquid crystal layer (200) of Figure 1. From Figure 3, it can be confirmed that the pitch change rate is a function of the distance (r) from the center (220) of the liquid crystal layer. The pitch change rate becomes faster as the distance increases. For example, the pitches $\Lambda_0$, $\Lambda_1$, and $\Lambda_r$ in Figure 3 have the relationship $\Lambda_0 > \Lambda_1 > \Lambda_r$.

As described above, in the geometric phase lens orientation, the orientation of the liquid crystal compound may be one oriented to have an azimuth angle changing depending on the distance along at least one direction (for example, an arbitrary direction perpendicular to the x-axis direction, y-axis direction, or z-axis direction in Figure 1) of plane directions of the liquid crystal layer.

At this time, the change of the azimuth angle may satisfy Equation 9 above.

In Equation 9 above, f may be appropriately adjusted depending on the use of the optical film, and for example, the lower limit thereof may be 1 mm, 5 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, or 95 mm or so, and the upper limit thereof may be 300 mm, 250 mm, 200 mm, 150 mm, 100 mm, 95 mm, 90 mm, 85 mm, 80 mm, 75 mm, 70 mm, or 65 mm or so. The focal length f may be within a range of more than or equal to, or more than any one of the above-described lower limits; within a range of less than

or equal to, or less than any one of the above-described upper limits; or within a range of less than or equal to, or less than any one of the above-described upper limits while being more than or equal to, or more than any one of the above-described lower limits. In the geometric phase lens, the focal length f may be adjusted by adjusting the change of the pitch, and such adjustment methods are known.

In Equation 9 above, $\lambda$ may be any one wavelength in the range of 400 nm to 700 nm, or any one wavelength in the range of 450 nm to 650 nm, or about 550 nm or so.

As can be seen with reference to Figure 2, the change of the azimuth angle in the geometric phase lens orientation may appear radially in the plane of the liquid crystal layer.

Figure 4 is a schematic diagram showing a liquid crystal layer (300) having a geometric phase grating orientation according to one example of the present application. The liquid crystal layer (300) generates a corresponding grating profile through the in-plane orientation of the liquid crystal compound. The in-plane orientation of the liquid crystal compound may be defined by an azimuth angle ($\theta$), which generates an optical phase difference T, and the optical phase difference T may be defined by the azimuth angle as $2\theta$.

Figure 5 is a diagram showing an example of the orientation (310) of the liquid crystal compound in the geometric phase grating orientation. In the above orientation, the orientation of the liquid crystal compound may be defined as an azimuth angle ($\theta$) that changes continuously along any specific direction (y-axis direction in the case of Figure 5), where the pitch (A) is substantially fixed. Here, the meaning of the pitch is the same as in the case of the geometric phase lens. In one example, as exemplarily shown in Figure 5, the azimuth angle $\theta$ of the liquid crystal compound changes along one direction (y-axis direction in the case of Figure 5) and remains substantially constant along a direction perpendicular to the one direction (x-axis direction in the case of Figure 5).

Figure 6 is a diagram illustratively showing the orientation (340) of the liquid crystal compound along the y-axis of the liquid crystal layer (300) of Figure 4. From Figure 6, it can be known that in the liquid crystal orientation of the geometric phase grating, the change rate of the pitch is substantially fixed and is not a function according to the distance to the center (320) of the grating orientation. For example, in Figure 6, the pitches $\Lambda_0$, $\Lambda_1$, and $\Lambda_r$ substantially satisfy the relationship $\Lambda_0=\Lambda_1=\Lambda_r$.

In the geometric phase grating orientation, the orientation of the liquid crystal compound may be one oriented to have an azimuth angle that changes along at least one direction among the plane directions of the liquid crystal layer. As described above, the pitch of the change in the azimuth angle along one direction in which the azimuth angle changes may be fixed constantly.

In the geometric phase grating orientation, regarding the orientation of the liquid crystal compound, the azimuth angle of the liquid crystal compound may be maintained constantly along a plane direction perpendicular to one direction in which the azimuth angle changes.

Here, the matters that the pitch of the azimuth angle change is fixed and the azimuth angle is kept constantly mean that the changes of the pitch and the azimuth angle are not substantially present, where the matter that the changes are not substantially present may mean the case that even if certain portions of the pitch and azimuth angle are slightly changed, the liquid crystal layer or the optical film as a whole is effectively capable of performing the function of the geometric phase grating.

In the geometric phase grating orientation, the pitch in one direction where the azimuth angle changes may be adjusted according to the use of the geometric phase grating. That is, the refraction angle of the grating satisfies Equation D below according to the pitch and the reference wavelength, so that an appropriate pitch may be set in consideration of the desired refraction angle.

[Equation D]

$$\sin\theta = \lambda / \Lambda$$

In Equation D, $\theta$ is the refraction angle, $\lambda$ is the reference wavelength, which is any one wavelength in the range of 400 nm to 700 nm, or any one wavelength in the range of 450 nm to 650 nm, or about 550 nm, and A is the pitch (unit: nm).

In one example, the lower limit of the pitch of the orientation of the liquid crystal compound may be 0.1 μm, 0.2 μm, 0.3 μm, 0.4 μm, 0.5 μm, 0.6 μm, 0.7 μm, 0.8 μm, 0.9 μm, 1 μm, 3 μm, 5 μm, 7 μm, 9 μm, 11 μm, 13 μm, or 15 μm or so, and the upper limit thereof may be 30 μm, 28 μm, 26 μm, 24 μm, 22 μm, 20 μm, 18 μm, 16 μm, 14 μm, 12 μm, 10 μm, 8 μm, 6 μm, 4 μm, or 2 μm or so. The pitch in the geometric phase grating orientation may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

It can be confirmed through a polarizing microscope whether the liquid crystal layer has the geometric phase orientation. That is, as described above, in the geometric phase orientation, the liquid crystal compound rotates to have a changing azimuth angle, so that upon observation through a polarizing microscope, it represents a pattern that relatively

dark shaded lines and relatively light shaded lines are repeated along the azimuth angle. Therefore, if the repetition of the line pattern is confirmed through the polarizing microscope, it can be regarded that the liquid crystal layer has the geometric phase orientation. In addition, as described above, the pitch (A) of the geometric phase orientation is the distance required for the azimuth angle of the liquid crystal compound to rotate 180 degrees in the initial state, and the dark line or the light line appears when the azimuth angle of 90 degrees is completed, so that the distance between two outermost dark shaded lines (or light shaded lines) of three adjacent dark shaded lines (or light shaded lines) in the pattern of observation through the polarizing microscope may be designated approximately as the pitch.

As the liquid crystal layer comprises such a geometrically phase-oriented liquid crystal compound, and this liquid crystal compound has reverse wavelength dispersion while being the above-described T-shaped liquid crystal compound, the liquid crystal layer or the optical film comprising the same can function as a geometric phase lens or a geometric phase grating with little or no wavelength dependence.

For example, the liquid crystal layer may satisfy at least one of the conditions of Equation 1 below and the conditions of Equation 2 below, or may satisfy both the conditions of Equation 1 below and the conditions of Equation 2 below. In this instance, the matter that the liquid crystal layer satisfies the conditions of Equation 1 and/or 2 means that the conditions of Equation 1 and/or 2 are satisfied in the entire region of the liquid crystal layer, or the conditions of Equations 1 and/or 2 are satisfied in at least a partial region of the liquid crystal layer (for example, at least the border of the liquid crystal layer).

For example, the liquid crystal layer may satisfy the conditions of Equations 1 and/or 2 below in a state where it is a single layer. At this time, in the case where the liquid crystal layer is substantially a single layer, as well as in the case where the liquid crystal layer comprises a plurality of layers, if the types and compositions of the liquid crystal compounds contained in the respective liquid crystal layers are the same, the plurality of layers are regarded as a single layer overall. That is, as described below, there may be a case where a plurality of sub-liquid crystal layers is formed to form the liquid crystal layer, and even in this case, if the plurality of sub-liquid crystal layers is formed using the liquid crystal compound with the same type and composition, the plurality of sub-liquid crystal layers may be regarded as a single layer overall.

The conditions of Equation 1 are as follows.

[Equation 1]

$$T_{avg} \leq 5\% \text{ and } SD_T \leq 1.5$$

Equation 1 means that the conditions, in which $SD_T$ is 1.5 or less while $T_{avg}$ is 5% or less, are simultaneously satisfied for the liquid crystal layer.

Meanwhile, in Equation 1, $T_{avg}$ is the average of $T_B$, $T_G$, and $T_R$, and $SD_T$ is the standard deviation of $T_B$, $T_G$, and $T_R$ above.

Here, $T_B$ is the straight light transmittance of light with a wavelength of 450 nm for the liquid crystal layer, $T_G$ is the straight light transmittance of light with a wavelength of 550 nm for the liquid crystal layer, and $T_R$ is the straight light transmittance of light with a wavelength of 610 nm for the liquid crystal layer.

Here, the light with wavelengths of 450 nm, 550 nm, and 610 nm may be unpolarized light or circularly polarized light (left- or right-circularly polarized light), and in the case of Equation 1, for example, it may be unpolarized light.

In relation to Equation 1, the term straight light transmittance is the transmittance of an arbitrary region of the liquid crystal layer. For example, referring to Figure 7, the straight light transmittance is a ratio that the light ($L_I$) incident on an arbitrary region (1001) of the liquid crystal layer parallel to the normal direction of the liquid crystal layer (100) passes through the region (1001) parallel to the normal direction (that is, the transmittance of the light indicated by the arrow $L_{E1}$ in Figure 7 to the light indicated by the arrow $L_I$ in Figure 7).

A geometric phase optical element plays a role in converging, dispersing, or steering incident light by diffracting or refracting the incident light in a predetermined direction depending on the state of the incident light. Therefore, as exemplarily shown in Figure 7, the geometric phase optical element comprises a region which converts light incident along the normal direction of the optical element (light indicated by the arrow $L_I$ in Figure 7) into light emitted along a direction different from the normal direction (light indicated by the arrow $L_{E2}$ in Figure 7). Therefore, theoretically, in the above region, the straight light transmittance needs to appear low, where such a characteristic is also called so-called 0 order leakage. However, when the geometric phase optical element exhibits wavelength dependence, the straight light transmittance does not appear constantly for each wavelength, and the straight light transmittance may optionally appear very high depending on the wavelength.

However, the liquid crystal layer has little wavelength dependence, and thus the average and standard deviation of $T_B$, $T_G$, and $T_R$ can be controlled to be low.

The average $T_{avg}$ of $T_B$, $T_G$, and $T_R$ in Equation 1 above is the arithmetic average, which is thus calculated as $(T_B + T_G + T_R)/3$. The upper limit of the average $T_{avg}$ may be 5% or so, as described in Equation 1, or in another example, it may

be 4.5%, 4%, 3.5%, 3%, 2.5%, or 2% or so, and the lower limit thereof may be 0%, 0.5%, 1%, 1.5%, or 2% or so. The average may be within a range of less than or equal to, or less than any one of the above-described upper limits; or within a range of less than or equal to, or less than any one of the above-described upper limits while being more than or equal to, or more than any one of the above-described lower limits.

The standard deviation $SD_T$ in Equation 1 is calculated as $(((T_{avg}-T_B)^2+(T_{avg}-T_G)^2+(T_{avg}-T_R)^2)/3)^{0.5}$. The upper limit of the $SD_T$ may be 1.5 or so, as described in Equation 1, and in another example, it may be 1.4, 1.3, 1.2, 1.1, 1, 0.9, 0.8, or 0.65 or so, and the lower limit thereof may be 0, 0.1, 0.2, 0.3, 0.4, 0.5, 0.6, or 0.7 or so. The standard deviation may be within a range of less than or equal to, or less than any one of the above-described upper limits; or within a range of less than or equal to, or less than any one of the above-described upper limits while being more than or equal to, or more than any one of the above-described lower limits.

Each of $T_B$, $T_G$ and $T_R$ in Equation 1 may be adjusted so that the average and standard deviation as described above are met. For example, the upper limit of the $T_R$ may be 5%, 4.5%, 4%, 3.5%, 3%, 2.5%, 2%, or 1.5% or so, and the lower limit thereof may be 0%, 0.5%, 1%, 1.5%, 2%, or 2.5% or so. The $T_R$ may be within a range of less than or equal to, or less than any one of the above-described upper limits; or within a range of less than or equal to, or less than any one of the above-described upper limits while being more than or equal to, or more than any one of the above-described lower limits.

The upper limit of $T_G$ in Equation 1 may be 5%, 4.5%, 4%, 3.5%, 3%, 2.5%, 2%, or 1.5% or so, and the lower limit thereof may be 0%, 0.5%, 1%, or 1.5% or so. The $T_G$ may be within a range of less than or equal to, or less than any one of the above-described upper limits; or within a range of less than or equal to, or less than any one of the above-described upper limits while being more than or equal to, or more than any one of the above-described lower limits.

The upper limit of $T_B$ in Equation 1 may be 5%, 4.5%, 4%, 3.5%, 3%, 2.5%, 2%, or 1.5% or so, and the lower limit thereof may be 0%, 0.5%, 1%, 1.5%, 2%, or 2.5% or so. The $T_B$ may be within a range of less than or equal to, or less than any one of the above-described upper limits; or within a range of less than or equal to, or less than any one of the above-described upper limits while being more than or equal to, or more than any one of the above-described lower limits.

The conditions of Equation 2 are as follows.

[Equation 2]

$$I_{avg} \leq 100\times10^{-3} \text{ cd and } SD_I \leq 25\times10^{-3}$$

Equation 2 means that the conditions, in which $SD_I$ is 0.025 or less while $I_{avg}$ is 0.1 cd or less, are simultaneously satisfied for the liquid crystal layer.

In Equation 2, $I_{avg}$ is the average of $I_B$, $I_G$, and $I_R$, and $SD_I$ is the standard deviation of $I_B$, $I_G$, and $I_R$.

The $I_B$ is the straight light intensity of light with a wavelength of 450 nm for the liquid crystal layer, the $I_G$ is the straight light intensity of light with a wavelength of 550 nm for the liquid crystal layer, and the $I_R$ is the straight light intensity of light with a wavelength of 610 nm for the liquid crystal layer.

The light with wavelengths of 450 nm, 550 nm, and 610 nm may be unpolarized light or circularly polarized light (left- or right-circularly polarized light), and in the case of Equation 2, for example, it may be circularly polarized light, that is, left-circularly polarized light or right-circularly polarized light.

In relation to Equation 2, the term straight light intensity is the intensity of an arbitrary region of the liquid crystal layer. For example, referring to Figure 7, the straight light intensity is the intensity of the light passing through any region (1001) of the liquid crystal layer parallel to the normal direction of the liquid crystal layer (100) among light ($L_I$) incident on the region (1001) parallel to the normal direction.

For the reasons as described above, in the geometric phase optical element, theoretically, the straight light intensity needs to appear low. When the geometric phase optical element exhibits wavelength dependence, the straight light intensity does not appear constantly for each wavelength, and the straight light intensity may optionally appear very high depending on the wavelength.

However, the liquid crystal layer has little wavelength dependence, and thus the average and standard deviation of $I_B$, $I_G$, and $I_R$ can be controlled to be low.

The average $I_{avg}$ of $I_B$, $I_G$, and $I_R$ in Equation 2 above is the arithmetic average, and is thus calculated as $(I_B+I_G+I_R)/3$. The upper limit of the average $I_{avg}$ may be 100 or so as described in Equation 2, and in another example, it may be $95\times10^{-3}$ cd, $90\times10^{-3}$ cd, $85\times10^{-3}$ cd, $80\times10^{-3}$ cd, $75\times10^{-3}$ cd, $70\times10^{-3}$ cd, $65\times10^{-3}$ cd, $60\times10^{-3}$ cd, $55\times10^{-3}$ cd, $50\times10^{-3}$ cd, $45\times10^{-3}$ cd, $40\times10^{-3}$ cd, $35\times10^{-3}$ cd, $30\times10^{-3}$ cd, $25\times10^{-3}$ cd, $20\times10^{-3}$ cd, $15\times10^{-3}$ cd, or $10\times10^{-3}$ cd or so, and the lower limit thereof may be $0\times10^{-3}$ cd, $2\times10^{-3}$ cd, $4\times10^{-3}$ cd, $6\times10^{-3}$ cd, $8\times10^{-3}$ cd, $10\times10^{-3}$ cd, $12\times10^{-3}$ cd, or $14\times10^{-3}$ cd or so. The average may be within a range of less than or equal to, or less than any one of the above-described upper limits; or within a range of less than or equal to, or less than any one of the above-described upper limits while being more than or equal to, or more than any one of the above-described lower limits.

The standard deviation $SD_I$ in Equation 2 is calculated as $(((I_{avg}-I_B)^2+(I_{avg}-I_G)^2+(I_{avg}-I_R)^2)/3)^{0.5}$. The upper limit of

the $SD_I$ may be $25\times10^{-3}$ or so as described in Equation 2, and in another example, it may be $20\times10^{-3}$, $15\times10^{-3}$, $10\times10^{-3}$, $9\times10^{-3}$, $8\times10^{-3}$, $7\times10^{-3}$, $6\times10^{-3}$, $5\times10^{-3}$, $4\times10^{-3}$, $3\times10^{-3}$, or $2.5\times10^{-3}$ or so, and the lower limit thereof may be $0\times10^{-3}$, $0.1\times10^{-3}$, $0.5\times10^{-3}$, $1\times10^{-3}$, $1.5\times10^{-3}$, $2\times10^{-3}$, $2.5\times10^{-3}$, $3\times10^{-3}$, $3.5\times10^{-3}$, $4\times10^{-3}$, $4.5\times10^{-3}$, $5\times10^{-3}$, $5.5\times10^{-3}$, $6\times10^{-3}$, or $6.5\times10^{-3}$ or so. The standard deviation may be within a range of less than or equal to, or less than any one of the above-described upper limits; or within a range of less than or equal to, or less than any one of the above-described upper limits while being more than or equal to, or more than any one of the above-described lower limits.

Each of $I_B$, $I_G$ and $I_R$ in Equation 2 may be adjusted so that the average and standard deviation as described above are met.

For example, the upper limit of $I_R$ in Equation 2 may be 0.5, 0.45, 0.4, 0.35, 0.3, 0.25, 0.2, 0.15, 0.1, 0.09, 0.08, 0.07, 0.06, 0.05, 0.04, 0.03, 0.02, 0.01, 0.009, 0.008, 0.007, or 0.006 or so, and the lower limit thereof may be 0, 0.001, 0.002, 0.003, 0.004, 0.005, 0.006, 0.007, 0.008, 0.009, 0.01, or 0.02 or so. The $I_R$ may be within a range of less than or equal to, or less than any one of the above-described upper limits; or within a range of less than or equal to, or less than any one of the above-described upper limits while being more than or equal to, or more than any one of the above-described lower limits.

In Equation 2, the upper limit of $I_G$ may be 0.5, 0.45, 0.4, 0.35, 0.3, 0.25, 0.2, 0.15, 0.1, 0.09, 0.08, 0.07, 0.06, 0.05, 0.04, 0.03, 0.02, 0.01, 0.009, 0.008, 0.007, or 0.006 or so, and the lower limit thereof may be 0, 0.001, 0.002, 0.003, 0.004, 0.005, 0.006, 0.007, 0.008, 0.009, 0.01, or 0.02 or so. The $I_G$ may be within a range of less than or equal to, or less than any one of the above-described upper limits; or within a range of less than or equal to, or less than any one of the above-described upper limits while being more than or equal to, or more than any one of the above-described lower limits.

In Equation 2, the upper limit of $I_B$ may be 0.5, 0.45, 0.4, 0.35, 0.3, 0.25, 0.2, 0.15, 0.1, 0.09, 0.08, 0.07, 0.06, 0.05, 0.04, 0.03, 0.02, 0.01, 0.009, 0.008, 0.007, or 0.006 or so, and the lower limit thereof may be 0, 0.001, 0.002, 0.003, 0.004, 0.005, 0.006, 0.007, 0.008, 0.009, 0.01, or 0.02 or so. The $I_B$ may be within a range of less than or equal to, or less than any one of the above-described upper limits; or within a range of less than or equal to, or less than any one of the above-described upper limits while being more than or equal to, or more than any one of the above-described lower limits.

In this way, the liquid crystal layer may also exhibit a diffraction efficiency without wavelength dependence, or a diffraction efficiency with low wavelength dependence.

For example, the liquid crystal layer may satisfy Equation 3 below, or may include a region satisfying Equation 3 above. Such a region of the liquid crystal layer may be a region satisfying the conditions of Equation 1 and/or 2 above. The liquid crystal layer may satisfy Equation 3 below in the state of being a single layer as described above, or may include a region satisfying Equation 3 above.

[Equation 3]

$$\Delta F1 \text{ and } \Delta F2 \leq 30\%$$

In Equation 3, $\Delta F1$ is the absolute value of F1 according to Equation 4 below, and $\Delta F2$ is the absolute value of F2 according to Equation 5 below:

[Equation 4]

$$F1 = 100 \times(\theta_R-\theta_G)/\theta_G$$

[Equation 5]

$$F2 = 100 \times(\theta_B-\theta_G)/\theta_G$$

In Equations 4 and 5, $\theta_R$ is a refraction angle that satisfies Equation 6 below, $\theta_G$ is a refraction angle that satisfies Equation 7 below, and $\theta_B$ is a refraction angle that satisfies Equation 8 below. The refraction angle may be a refraction angle in the liquid crystal layer or an arbitrary region of the liquid crystal layer.

[Equation 6]

$$\sin\theta_R=610/\Lambda$$

[Equation 7]

$$\sin\theta_G=550/\Lambda$$

[Equation 8]

$$\sin\theta_B=450/\Lambda$$

In Equations 6 to 8, A is the pitch (unit: nm) of the geometric phase orientation in the liquid crystal layer or an arbitrary region of the liquid crystal layer. The meaning of the pitch of the geometric phase orientation is the same as described in the geometric phase orientation.

The geometric phase optical element must function to diffract or refract the incident light at a predetermined refraction angle depending on the state of the incident light. At this time, the refraction angle is the angle formed by the emission direction of the refracted light with respect to the normal direction of the optical element. For example, referring to Figure 7, the angle formed between the normal direction of the liquid crystal layer (100) and the emission direction of the light (light indicated by the arrow $L_{E2}$) refracted and emitted by the liquid crystal layer (100) becomes the refraction angle.

When the geometric phase optical element has strong wavelength dependence, the refraction angle varies depending on the wavelength in the same region, and such a refraction angle difference for each wavelength causes optical defects.

Since the liquid crystal layer comprises the geometrically phase-oriented liquid crystal compound and simultaneously has the above-mentioned reverse wavelength dispersion, it may satisfy Equation 3, or include a region satisfying the same.

In Equation 3, the upper limit of $\Delta F1$ may be 30% or so, as shown in Equation 3, or may be 28%, 26%, 24%, 22%, 20%, 18%, 16%, 14%, 12%, 10%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, or 0.1% or so, and the lower limit thereof may be 0%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5%, 5%, 10%, or 15% or so. The $\Delta F1$ may be within a range of less than or equal to, or less than any one of the above-described upper limits; or within a range of less than or equal to, or less than any one of the above-described upper limits while being more than or equal to, or more than any one of the above-described lower limits.

The upper limit of $\Delta F2$ in Equation 3 may be 30% or so, as shown in Equation 3, or may be 28%, 26%, 24%, 22%, 20%, 18%, 16%, 14%, 12%, 10%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, or 0.1% or so, and the lower limit thereof may be 0%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5%, 5%, 10%, or 15% or so. The $\Delta F2$ may be within a range of less than or equal to, or less than any one of the above-described upper limits; or within a range of less than or equal to, or less than any one of the above-described upper limits while being more than or equal to, or more than any one of the above-described lower limits.

The liquid crystal layer may comprise a T-shaped liquid crystal compound, as described above, and the T-shaped liquid crystal compound may be a liquid crystal compound having reverse wavelength dispersion. In one example, the T-shaped liquid crystal compound may be a polymerizable liquid crystal compound, and when such a liquid crystal compound is polymerized, the passive liquid crystal layer may be formed.

When the liquid crystal layer is the passive liquid crystal layer, it may contain a polymerization unit of the T-shaped liquid crystal compound, which is a polymerizable liquid crystal compound. The polymerization units mean units formed by polymerizing or curing polymerizable liquid crystal compounds.

As used herein, the term liquid crystal compound may mean a compound containing a moiety capable of exhibiting liquid crystallinity, for example, a mesogen skeleton, and the like, and the polymerizable liquid crystal compound may mean a compound containing one or more polymerizable functional groups together with the moiety capable of exhibiting liquid crystallinity. Such polymerizable liquid crystal compounds are variously known as a so-called RM (Reactive Mesogen). The polymerizable liquid crystal compound may be included in a polymerized form, that is, the above-mentioned polymerization unit within the cured layer, which may mean a state where the liquid crystal compound is polymerized to form a skeleton such as the main chain or side chain of the liquid crystal polymer within the cured layer.

The polymerizable liquid crystal compound may be a monofunctional or multifunctional polymerizable liquid crystal compound. Here, the monofunctional polymerizable liquid crystal compound may mean a compound having one polymerizable functional group, and the multifunctional polymerizable liquid crystal compound may mean a compound containing two or more polymerizable functional groups. In one example, the lower limit of the number of polymerizable functional groups in the multifunctional polymerizable liquid crystal compound may be 2, or 3 or so, and the upper limit thereof may be 10, 9, 8, 7, 6, 5, 4, 3, or 2 or so. The number of polymerizable functional groups may be within a range of more than or equal to, or more than any one of the above-described lower limits; within a range of less than or equal to, or less than any one of the above-described upper limits; or within a range of less than or equal to, or less than any one of the

above-described upper limits while being more than or equal to, or more than any one of the above-described lower limits.

As the polymerizable liquid crystal composition prepared by formulating the polymerizable liquid crystal compound with other components such as, for example, an initiator, a stabilizer, and/or a non-polymerizable liquid crystal compound is cured in an oriented state on an alignment film, it is possible to form the cured layer (liquid crystal layer) in which birefringence is expressed.

To secure the desired geometric phase orientation, a reverse-dispersion liquid crystal compound or a reverse-dispersion polymerizable liquid crystal compound having a predetermined structure may be used.

It is known that the birefringence of the liquid crystal compound is mainly determined by a molecular conjugation structure, a differential oscillator strength, and an order parameter, and the like, and in order that the liquid crystal compound exhibits high birefringence, it requires a large electron density in the main axis direction, so that most liquid crystal compounds have a highly conjugated shape in the long axis direction.

However, in order that the liquid crystal compound exhibits reverse dispersion characteristics, it is necessary to adjust a birefringent property between the long axis and the axis perpendicular thereto, and accordingly, most liquid crystal compounds designed to have reverse dispersion characteristics have an H-type molecular shape, and are simultaneously in the form that the main axis (long axis) has a large phase difference and a small dispersion value, and the axis perpendicular thereto has a small phase difference and a large dispersion value.

In the liquid crystal layer disclosed in this specification, a liquid crystal compound (T-shaped liquid crystal compound), in which the molecular structure or mesogen skeletal structure is a T-type, is used as the liquid crystal compound. Through the application of such a compound, it is possible to effectively secure the desired orientation.

As such a liquid crystal compound, a compound known as a T-shaped liquid crystal compound may be used among known general liquid crystal compounds.

To more efficiently obtain the desired liquid crystal layer, for example, a liquid crystal compound having a structure of Formula 1 below may be used as the T-shaped liquid crystal compound.

[Formula 1]

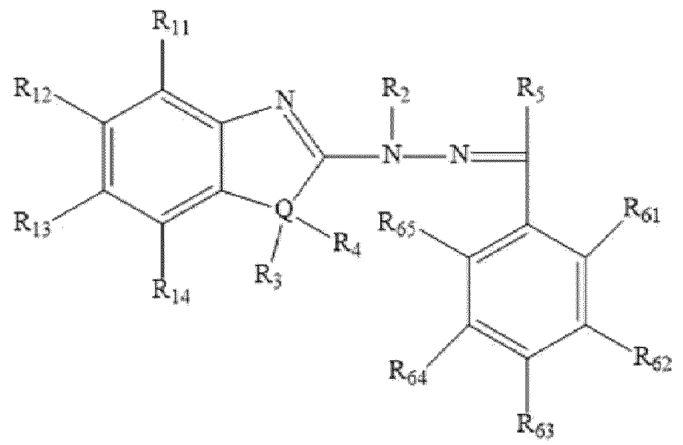

In Formula 1, Q may be a carbon atom or a sulfur atom. Here, when Q is a sulfur atom, $R_3$ and $R_4$ do not exist in Formula 1.

In Formula 1, $R_{11}$ to $R_{14}$ and $R_3$ to $R_5$ may each independently be a hydrogen atom, an alkyl group, an alkoxy group, a cyano group, or a halogen atom. For example, in Formula 1, $R_{11}$ to $R_{14}$ and $R_3$ to $R_5$ may each independently be a hydrogen atom or an alkyl group, or a hydrogen atom.

In Formula 1, $R_2$ may be a substituent of Formula 2 or 3 below, for example, a substituent of Formula 3 below.

[Formula 2] $-A_1-L_1-Cy-A_2-L_2-P_1$

In Formula 2, $A_1$ and $A_2$ may each independently be an oxygen atom or a single bond. For example, if $A_1$ is an oxygen atom, the oxygen atom may be connected to the skeleton of Formula 1, and if $A_1$ is a single bond, $L_1$ may be connected to the skeleton of Formula 1.

In Formula 2, $L_1$ and $L_2$ may each independently be -C(=O)-O-, -O-C(=O)-, an alkylene group or an alkylidene group, Cy may be an arylene group or a cycloalkylene group, and $P_1$ may be a hydrogen atom, an alkyl group, an aryl group, an acryloyl group, a methacryloyl group, an acryloyloxy group, or a methacryloyloxy group.

[Formula 3]

$$-L_3-\left[O-L_4\right]_n-O-P_2$$

In Formula 3, $L_3$ and $L_4$ may each independently be an alkylene group or an alkylidene group, and $L_3$ is connected to the skeleton of Formula 1. In Formula 3, $P_2$ may be a hydrogen atom, an alkyl group, an aryl group, an acryloyl group, or a methacryloyl group, and may be, for example, a hydrogen atom, an alkyl group, an acryloyl group, or a methacryloyl group. In Formula 3, n is an arbitrary number. For example, the lower limit of n may be 1, or 2 or so, and the upper limit thereof may be 10, 9, 8, 7, 6, 5, 4, 3, 2, or 1. The n may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. In Formula 3, when n is 2 or more, and thus a plurality of O-$L_4$ exists, the carbon numbers of $L_4$ may be the same or different from each other.

In Formula 1, $R_{61}$ to $R_{65}$ may each independently be a hydrogen atom, an alkyl group, an alkoxy group, a cyano group, a halogen atom, a substituent of Formula 4 below, or a substituent of Formula 5 below. For example, two or more, or two of $R_{61}$ to $R_{65}$ in Formula 1 may be substituents of Formula 4 below, or substituents of Formula 5 below, and for example, may be substituents of Formula 5 below.

For example, in Formula 1, any one of $R_{61}$ and $R_{62}$, and any one of $R_{63}$ to $R_{65}$ may be substituents of Formula 4 above, or substituents of Formula 5 below, and for example, may be substituents of Formula 5 above. As described above, when two of $R_{61}$ to $R_{65}$ of Formula 1 are substituents of Formula 4, or substituents of Formula 5, or are substituents of Formula 5, the two substituents may exist in a para position with respect to each other.

[Formula 4] $-A_3-L_5-Cy-A_4-L_6-P_3$

In Formula 4, $A_3$ and $A_4$ may each independently be an oxygen atom, an alkylene group, an alkylidene group, or a single bond. For example, when $A_3$ is an oxygen atom, an alkylene group, or an alkylidene group, $A_3$ may be connected to the skeleton of Formula 1, and when it is a single bond, $L_5$ may be connected to the skeleton of Formula 1.

In Formula 1, $L_5$ and $L_6$ may each independently be -C(=O)-O-, -O-C(=O)-, an alkylene group or an alkylidene group, Cy may be an arylene group or a cycloalkylene group, and $P_3$ may be a hydrogen atom, an alkyl group, an aryl group, an acryloyl group, a methacryloyl group, an acryloyloxy group, or a methacryloyloxy group. In an appropriate example, $P_3$ may be an acryloyl group, a methacryloyl group, an acryloyloxy group, or a methacryloyloxy group.

[Formula 5]

$$-A_5-L_7-Cy_1-A_6-L_8-Cy_2-A_7-L_9-P_4$$

In Formula 5, $A_5$, $A_6$, and $A_7$ may each independently be an oxygen atom or a single bond. For example, when $A_5$ is an oxygen atom, an alkylene group, or an alkylidene group, $A_5$ may be connected to the skeleton of Formula 1, and when it is a single bond, $L_7$ may be connected to the skeleton of Formula 1.

In Formula 5, $L_7$, $L_8$, and $L_9$ may each independently be -C(=O)-O-, -O-C(=O)-, an alkylidene group, or an alkylene group.

In Formula 5, any one of Cy1 and Cy2 may be a cycloalkylene group, and the other may be an arylene group. For example, Cy1 may be an arylene group and Cy2 may be a cycloalkylene group, or Cy1 may be a cycloalkylene group and Cy2 may be an arylene group.

In Formula 5, $P_4$ may be a hydrogen atom, an alkyl group, an aryl group, an acryloyl group, a methacryloyl group, an acryloyloxy group, or a methacryloyloxy group, and for example, may be an acryloyl group, a methacryloyl group, an acryloyloxy group, or a methacryloyloxy group.

In Formulas 1 to 5, the term single bond means a case where there is no separate atom at the relevant site. For example, if $A_2$ in Formula 2 is a single bond, a structure in which $A_2$ does not have a separate atom and Cy is directly connected to $L_2$ can be implemented.

In Formulas 1 to 5, the term alkyl group or alkoxy group may be a linear or branched alkyl group or alkoxy group having 1 to 20 carbon atoms, 1 to 16 carbon atoms, 1 to 12 carbon atoms, 1 to 8 carbon atoms, or 1 to 4 carbon atoms, which may be optionally substituted with one or more substituents.

In Formulas 1 to 5, the halogen atom may be fluorine, chlorine, or iodine.

In Formulas 1 to 5, the alkylene group is a divalent functional group formed by removing two hydrogen atoms from an alkane, which means a functional group in which the hydrogen atoms are removed from other carbon atoms of the alkane, respectively. Such an alkylene group may be a linear or branched alkylene group having 2 to 20 carbon atoms, 2 to 16 carbon atoms, 2 to 12 carbon atoms, 2 to 8 carbon atoms, or 2 to 4 carbon atoms, which may be optionally substituted by one or more substituents.

In Formulas 1 to 5, the alkylidene group is a divalent functional group formed by removing two hydrogen atoms from an alkane, which means a functional group in which the hydrogen atoms are removed from one carbon atom of the alkane. Such an alkylidene group may be a linear or branched alkylidene group having 1 to 20 carbon atoms, 1 to 16 carbon atoms, 1 to 12 carbon atoms, 1 to 8 carbon atoms, or 1 to 4 carbon atoms, which may be optionally substituted by one or more substituents.

In Formulas 1 to 5, the arylene group may be an arylene group having 6 to 12 carbon atoms, or a phenylene group.

In Formulas 1 to 5, the cycloalkylene group may be a cycloalkylene group having 3 to 12 carbon atoms or 3 to 9 carbon atoms, or a cyclohexylene group.

In the substituent of Formula 2, $A_1$ may be a single bond, $L_1$ may be -C(=O)-O- or - O-C(=O)-, $A_2$ may be an oxygen atom, and $L_2$ may be an alkylene group having 3 or more, 4 or more, or 5 or more carbon atoms. The carbon number of the alkylene group of $L_2$ above may be 12 or less, or 8 or less.

In one example of Formula 3, $L_3$ and $L_4$ may each independently be an alkylene group having 1 to 4 carbon atoms, and n may be a number in the range of 1 to 3, or a number in the range of 1 to 2, or may be 1 or 2. $P_2$ may be a polymerizable functional group (acryloyl group or methacryloyl group), or may be a hydrogen atom or an alkyl group (for example, an alkyl group having 1 to 4 carbon atoms). In addition, in the above case, when there are two or more units of [O-$L_4$] in Formula 3, the carbon numbers of the alkylene groups or alkylidene groups of $L_4$ in the respective units may be the same or different from each other.

In Formula 4, $A_3$ may be a single bond or an alkylene group having 1 to 4 carbon atoms, $L_5$ may be -C(=O)-O- or -O-C(=O)-, $A_4$ may be an oxygen atom, and $L_6$ may be an alkylene group having 3 or more, 4 or more, or 5 or more carbon atoms. The carbon number of the alkylene group of $L_6$ above may be 12 or less, or 8 or less.

In Formula 5, $A_5$ may be an oxygen atom, $L_7$ may be an alkylene group having 1 to 4 carbon atoms, $A_6$ may be a single bond, $L_8$ may be -C(=O)-O- or -O-C(=O) -, $A_7$ may be an oxygen atom, and $L_9$ may be an alkylene group having 3 or more, 4 or more, or 5 or more carbon atoms. The carbon number of the alkylene group of $L_9$ above may be 12 or less, or 8 or less.

It has been confirmed that the liquid crystal compound can effectively satisfy the desired physical properties (e.g., orientation) by the unique T-shaped structure and the conjugated structure centered on the N-N bond.

Such liquid crystal compounds are known compounds, which are known, for example, in Korean Laid-Open Patent Publication No. 10-2018-0048837, and the like.

In order to more suitably achieve the desired orientation, as the T-shaped liquid crystal compound, (1) a compound (first liquid crystal compound) within the scope of Formula 1, wherein $R_2$ in Formula 1 is a substituent of Formula 2 where $P_1$ is a hydrogen atom, an alkyl group, or an aryl group, or a substituent of Formula 3 where $P_2$ is a hydrogen atom, an alkyl group, or an aryl group, and (2) a compound (second liquid crystal compound) within the scope of Formula 1, wherein $R_2$ in Formula 1 is a substituent of Formula 2 where $P_1$ is an acryloyl group, a methacryloyl group, an acryloyloxy group, or a methacryloyloxy group, or a substituent of Formula 3 where $P_2$ is an acryloyl group or a methacryloyl group, can be used together.

In the first liquid crystal compound, when $R_2$ is a substituent of Formula 2, $P_1$ of Formula 2 may be a hydrogen atom, an alkyl group, or an aryl group, or may be a hydrogen atom or an alkyl group, or may be an alkyl group.

In the first liquid crystal compound, when $R_2$ is a substituent of Formula 3, $P_2$ of Formula 3 may be a hydrogen atom, an alkyl group, or an aryl group, or may be a hydrogen atom, an alkyl group, or may be an alkyl group.

In the first and second liquid crystal compounds, specific types of substituents and functional groups other than $P_1$ of the substituent of Formula 2 or $P_2$ of the substituent of Formula 3 are as described above.

In one example, Q of Formula 1 in the first liquid crystal compound may be a sulfur atom, and Q of Formula 1 in the second liquid crystal compound may be a carbon atom.

When the first and second liquid crystal compounds are used, the lower limit of the weight ratio of the second liquid crystal compound based on 100 parts by weight of the first liquid crystal compound may be 1 part by weight, 10 parts by weight, 20 parts by weight, 30 parts by weight, 40 parts by weight, 50 parts by weight, 60 parts by weight, 70 parts by weight, 80 parts by weight, 90 parts by weight, 95 parts by weight, or 100 parts by weight or so, and the upper limit thereof may be 1,000 parts by weight, 950 parts by weight, 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, 300 parts by weight, 250 parts by weight, 200 parts by weight, 150 parts by weight, 140 parts by weight, 130 parts by weight, 120 parts by weight, 110 parts by weight, 105 parts by weight, or 100 parts by weight or so. The content may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

If necessary, the liquid crystal layer may comprise another type of reverse-dispersion liquid crystal compound in addition to the T-shaped liquid crystal compound, or may further comprise a normal dispersion liquid crystal compound. In this case, the specific types of other liquid crystal compounds that can be included are not particularly limited.

As other liquid crystal compounds that can be applied, liquid crystal compounds known in, for example, Korean Registration Patent No. 1729819, Korean Registration Patent No. 1640670, Korean Registration Patent No. 1557202, Korean Registration Patent No. 1472187, Korean Registration Patent No. 1460862, Korean Registration Patent No. 1191124, Korean Registration Patent No. 1191125 and/or Korean Registration Patent No. 1191129, and the like may be used, without being limited thereto.

The ratio of the normal dispersion liquid crystal compound and the like in the liquid crystal layer may be adjusted to a range capable of securing the desired characteristics. For example, liquid crystal compounds other than the T-shaped liquid crystal compound may be included in a ratio of more than 0 parts by weight to 45 parts by weight or less or so relative to 100 parts by weight of the T-shaped liquid crystal compound.

The liquid crystal layer may comprise necessary additives in addition to the liquid crystal compound. Examples of such additives may include known additives such as initiators, ultraviolet stabilizers, and/or ultraviolet absorbers.

Such a liquid crystal layer may have the adjusted thickness to be capable of exhibiting desired characteristics. For example, if the thickness of the liquid crystal layer is too low, the desired performance may not be obtained even when the liquid crystal compound is used. For example, the lower limit of the thickness of the liquid crystal layer may be 3.5 μm, 3.6 μm, 3.7 μm, 3.8 μm, 3.9 μm, 4.0 μm, 4.1 μm, or 4.2 μm or so, and the upper limit thereof may be 10 μm, 9 μm, 8 μm, 7 μm, 6 μm, 5 μm, 4.9 μm, 4.8 μm, 4.7 μm, 4.6 μm, 4.5 μm, 4.4 μm, 4.3 μm, 4.2 μm, 4.1 μm, or 4 μm or so. The thickness may be within a range of more than or equal to, or more than any one of the above-described lower limits; or within a range of less than or equal to, or less than any one of the above-described upper limits while being more than or equal to, or more than any one of the above-described lower limits.

The optical film may further comprise other necessary layers if it comprises the liquid crystal layer. Examples of such other layers may be exemplified by an orientation layer that induces the orientation of the liquid crystal compound, a base material layer on which the orientation layer or the liquid crystal layer is formed, and/or a retardation film or circularly polarizing plate formed to allow circularly polarized light to be incident on the liquid crystal layer, and the like, but is not limited thereto.

This specification also discloses a method for manufacturing the optical film.

When the above-described liquid crystal compound is applied to form a geometrically phase-oriented liquid crystal layer, it is possible to obtain relatively excellent orientation, but it is difficult to achieve the desired orientation only by using the liquid crystal compound, and process conditions must be controlled, and especially it is necessary to control the thickness of the liquid crystal layer.

The liquid crystal layer may be formed by coating a material (for example, coating liquid) comprising a liquid crystal compound on a liquid crystal orientation surface, orienting the liquid crystal compound, and then curing the liquid crystal compound if necessary.

To the method of forming a liquid crystal layer disclosed in this specification, the same method as above can also be applied, but the thickness of the layer comprising the liquid crystal compound must be controlled in the process.

For example, the method for manufacturing the optical film comprises a step of forming a layer of a material containing a liquid crystal compound on a liquid crystal orientation surface, and geometrically phase-orienting the liquid crystal compound to form a liquid crystal layer.

In this instance, as the liquid crystal compound, at least the above-described T-shaped liquid crystal compound is used.

In the manufacturing method disclosed herein, the layer of the material containing the liquid crystal compound, or the liquid crystal layer in the above process must be controlled to have a thickness such that T/P of Equation A below is within a predetermined range.

[Equation A]

$$T/P$$

In Equation A, T is the thickness of the liquid crystal layer or the layer of the material containing the liquid crystal compound, and P is the pitch of the geometric phase orientation.

Here, when the geometric phase orientation is the orientation in which the above-mentioned pitch is kept constantly (geometric phase grating orientation, etc.), P is the pitch that is kept constantly, and when it is the orientation that the above-mentioned pitch changes (geometric phase lens orientation, etc.), it is the smallest pitch among the changing

pitches.

In Equation A, T and P apply the same units, and for example, apply μm.

For example, the upper limit of T/P in Equation A above may be 0.45, 0.43, 0.41, 0.39, 0.37, 0.35, 0.33, 0.31, 0.29, or 0.27 or so, and the lower limit thereof may be 0.01, 0.03, 0.05, 0.07, 0.09, 0.1, 0.12, 0.14, 0.16, 0.18, 0.2, 0.22, 0.24, 0.26, 0.28, 0.30, 0.32, or 0.34 or so. The T/P may be within a range of less than or equal to, or less than any one of the above-described upper limits; or within a range of less than or equal to, or less than any one of the above-described upper limits while being more than or equal to, or more than any one of the above-described lower limits. When the T/P range is not met, it may become difficult to secure the desired proper orientation.

The method of adjusting the thickness of the layer of the material containing the liquid crystal compound or the liquid crystal layer is not particularly limited, and for example, upon applying a material such as a coating liquid containing the liquid crystal compound, it is possible to secure the application thickness by adjusting the thickness.

The liquid crystal layer may be formed by orienting the liquid crystal compound thus formed and then curing it, and in this case, a known curing method may be applied as the curing method.

Here, the specific type of the applied liquid crystal orientation surface is not particularly limited. Various alignment films for orientation of liquid crystal compounds are known, and alignment films inducing the geometric phase orientation are also known. Therefore, in one example, the liquid crystal orientation surface can be formed by a method of forming the alignment film on an appropriate substrate, or the like.

In some cases, for example, when the desired pitch is relatively small, it may be difficult to form the desired thickness in a single process while satisfying the T/P of Equation A above.

In this case, the process of forming the liquid crystal layer can be repeated multiple times.

For example, the method for manufacturing the optical film may comprise a first step of forming a layer of a material containing the liquid crystal compound on a liquid crystal orientation surface and orienting it to form a first sub-liquid crystal layer; and a second step of forming a layer of a material containing the liquid crystal compound on the first sub-liquid crystal layer and orienting it to form a second sub-liquid crystal layer.

Even in this case, at least the T-shaped liquid crystal compound can be used as the liquid crystal compound.

In addition, both the first and second steps may form the layer of the material containing the liquid crystal compound, or the liquid crystal layer (in this case, the sub-liquid crystal layer) such that the thickness satisfies the range of T/P of Equation A as described above.

In the method, the coating, orientation, and optional curing processes are performed multiple times to form a liquid crystal layer with the desired thickness.

Accordingly, the method for manufacturing the optical film comprises the steps of forming a layer of a material containing a liquid crystal compound on a liquid crystal orientation surface, and orienting the liquid crystal compound in a geometric phase to form the liquid crystal layer containing the geometrically phase-oriented liquid crystal compound, but the liquid crystal layer may be formed multiple times.

In the manufacturing process, the second step may be repeated two or more times. In this case, the additionally formed sub-liquid crystal layers may be formed sequentially on the sub-liquid crystal layer formed in the second step, and even in this case, each sub-liquid crystal layer is formed so that the T/P of Equation A above is within the above-described range.

Here, the number of repetitions of the second step is not particularly limited, and for example, it may be repeated until the sum of the thicknesses of the sub-liquid crystal layers formed becomes the final thickness of the desired liquid crystal layer.

The method of forming the liquid crystal layer or sub-liquid crystal layer by coating and orienting the material containing the liquid crystal compound is not particularly limited, and the liquid crystal layer or sub-liquid crystal layer may be formed in the usual manner, except that the thickness of the liquid crystal layer or sub-liquid crystal layer is controlled as described above. In addition, if necessary, in each step of forming the liquid crystal layer or sub-liquid crystal layer, a step of fixing the orientation of the liquid crystal compound through polymerization or curing may be performed.

The present application also relates to an optical device comprising the optical film. The specific type of the optical device is not particularly limited, which may be various types of optical devices requiring geometric phase lenses and/or geometric phase gratings.

Representative examples of such optical devices include so-called VR (Virtual Reality) displays, AR (Augmented Reality) displays, or MR (Mixed Reality) displays. Therefore, the optical device may be the VR (Virtual Reality) display, AR (Augmented Reality) display, or MR (Mixed Reality) display, or a part thereof.

The method of constructing the optical device using the optical film of the present application is not particularly limited, and the optical device may be configured in a known manner if the optical film is applied.

In addition, the specific type of the optical device is not limited to the VR (Virtual Reality) display, AR (Augmented Reality) display, or MR (Mixed Reality) display, and the optical film may be applied to various types of optical devices requiring geometric phase lenses and/or geometric phase gratings.

[Brief Description of Drawings]

Figures 1 to 3 are exemplary diagrams for explaining geometric phase lens orientation.

Figures 4 to 6 are exemplary diagrams for explaining geometric phase grating orientation.

Figure 7 is an exemplary diagram for explaining straight light transmittance, and the like.

Figures 8 to 10 are polarization micrographs of the geometric phase orientation of Examples 1 to 3, respectively.

Figures 11 to 20 are polarization micrographs of the geometric phase orientation of Comparative Examples 1 to 20, respectively.

Figures 21 to 23, and 27 to 29 show results of evaluating diffraction efficiencies of the optical films of Examples 1 to 3.

Figures 24 to 26, and 30 to 32 show results of evaluating diffraction efficiencies of the optical films of Comparative Examples 8 to 10.

[Effects of Invention]

This specification discloses a geometric phase optical element, a manufacturing method thereof, and a use thereof. This specification discloses a geometric phase optical element suppressed to have no or very little wavelength dependence, a manufacturing method thereof, and a use thereof. In this specification, a geometric phase optical element, which has no or little wavelength dependence, by using a liquid crystal compound with a specific structure, controlling the thickness of a liquid crystal layer, and adjusting a manufacturing method, a manufacturing method thereof, and a use thereof are disclosed.

[Mode for Invention]

Hereinafter, the present application will be described in detail through examples and comparative examples, but the scope of the present application is not limited by the transmittance variable device below.

**Preparation Example 1.**

A reactive liquid crystal compound with a structure of Formula A below and a reactive liquid crystal compound with a structure of Formula B below were used.

[Formula A]

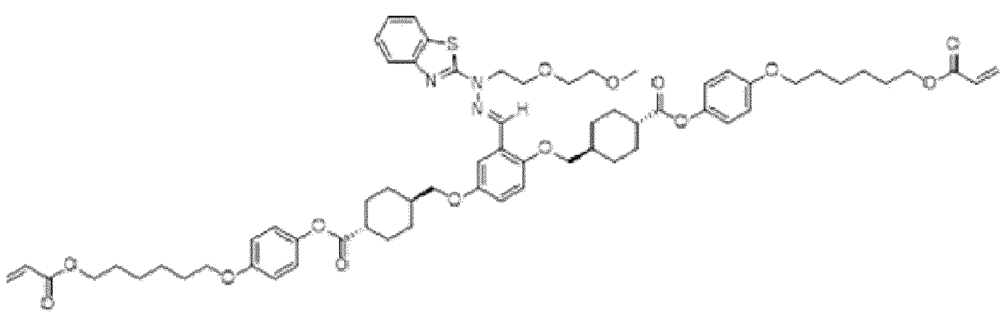

[Formula B]

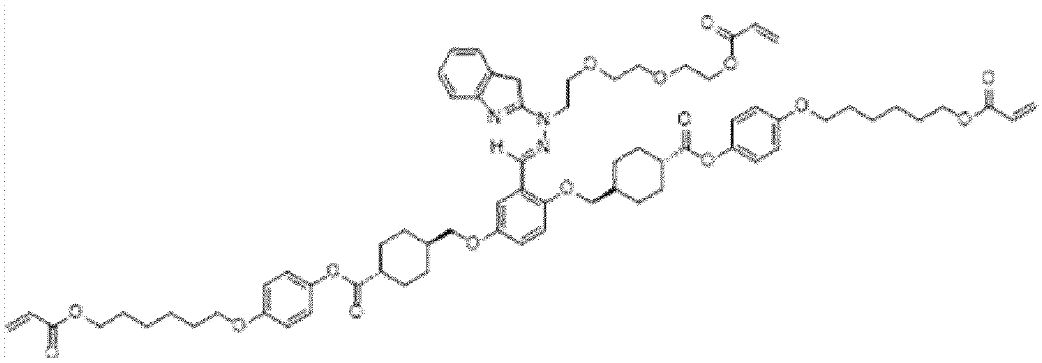

The reactive compounds are T-shaped reactive liquid crystal compounds (T-shaped reactive mesogens) known in Korean Laid-Open Patent Publication No. 10-2018-0048837, and the like, which can be obtained from DIC or synthesized in the manner described in the above publication. A mixed solvent was prepared by mixing toluene (Tol) and BC (butyl carbitol) in a weight ratio of 8:2 (Tol: BC), and the reactive liquid crystal compounds of Formulas A and B above were introduced to the mixed solvent. Upon the introduction, the mixing ratio of the reactive liquid crystal compounds of Formulas A and B was set to 1:1 in a weight ratio (A: B), and the weight ratio (solvent: liquid crystal) of the mixed solvent and the reactive liquid crystal compounds was set to 7:3. Subsequently, a coating liquid A was prepared by mixing about 5 parts by weight of an initiator (Irgacure 819, manufactured by Ciba) relative to 100 parts by weight of the reactive liquid crystal compound.

**Preparation Example 2.**

A coating liquid (coating liquid B) was prepared in the same manner as Preparation Example 1, except that the weight ratio (solvent: liquid crystal) of the mixed solvent and the reactive liquid crystal compounds was set to 91:9.

**Example 1**

An isotropic alkali-free glass (thickness: about 0.7 mm) was used as a substrate. To form an alignment film on the substrate, a coating liquid for an alignment film (Nissan, Smaple A-LC) was bar-coated and dried at about 65°C for 4 minutes or so to form a layer (thickness: about 180 to 200 nm). Subsequently, the layer of the coating liquid for an alignment film was subjected to an orientation treatment to form an alignment film. For the orientation treatment, laser pattern exposure was performed to induce the orientation of the geometric phase grating. The laser pattern exposure is performed by overlapping straight light and diffusion light. The orientation treatment was performed in the manner described in the literature (Optics Express Vol. 27, Issue 3, pp. 2632-2642 (2019)), and the orientation treatment capable of forming a geometric phase grating with a pitch of about 15 μm or so was performed.

After the coating liquid A of Preparation Example 1 was coated on the alignment film in a bar coating manner, and then maintained at about 100°C for 2 minutes or so, it was cooled (in the vicinity of about 40°C) to orient the liquid crystal compound, and then irradiated with ultraviolet rays in a light quantity of about 100 mJ/cm$^2$ by means of Fusion UV system under a nitrogen atmosphere to form a liquid crystal layer (geometric phase grating) with a thickness of about 4 μm or so. Figure 8 is the results of confirming the orientation of the geometric phase grating of the liquid crystal compound through a polarizing microscope of the above steps. The polarizing microscope imaging was performed at a magnification of 50x using equipment (Olympus, BX53M). From Figure 8, it can be confirmed that a geometric phase grating with a pitch of about 15.84 μm or so has been formed through efficient orientation.

**Example 2**

A geometric phase grating was formed in the same manner as in Example 1, except that the coating thickness of the coating liquid A of Preparation Example 1 was adjusted to form a liquid crystal layer (geometric phase grating) with a final thickness of about 4.3 μm or so on the alignment film. Figure 9 is the results of confirming the orientation of the geometric phase grating through a polarizing microscope in the same manner as in Example 1. From Figure 9, it can be confirmed that a geometric phase grating with a pitch of about 15.40 μm or so has been formed through efficient orientation.

**Example 3**

As a substrate, the same isotropic alkali-free glass (thickness: about 0.7 mm) as in Example 1 was used. To form an alignment film on the substrate, a coating liquid for an alignment layer (Nissan, Smaple A-LC) was bar-coated and dried at about 65°C for 4 minutes or so to form a layer (thickness: about 180 to 200 nm). Subsequently, the layer of the coating liquid for an alignment film was subjected to an orientation treatment to form an alignment film. For the orientation treatment, laser pattern exposure was performed to induce the orientation of the geometric phase lens. The laser pattern exposure is performed by overlapping straight light and diffusion light. The orientation treatment was performed in the manner described in the literature (Optics Express Vol. 27, Issue 3, pp. 2632-2642 (2019)), and the orientation treatment capable of forming a geometric phase lens with an end region pitch of about 1.7 μm or so was performed.

After the coating liquid B of Preparation Example 2 was coated on the alignment film to a thickness of about 0.6 μm or so in a spin coating manner (3,000 rpm conditions), and then maintained at about 100°C for 2 minutes or so, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a primary liquid crystal layer (primary process). Subsequently, after the coating liquid B was coated on the primary liquid crystal layer to a thickness of about 0.6 μm or so in the same manner as above, and then maintained at about 100°C for 2 minutes or so, and cooled (in the vicinity of about 40°C) under a nitrogen atmosphere, the process of irradiating it with ultraviolet rays (about 100 $mJ/cm^2$) by means of Fusion UV system was repeated 7 times to form a liquid crystal layer (geometric phase lens) with a final thickness of about 4.8 μm or so. Figure 10 is the results of confirming the end region orientation of the geometric phase lens through a polarizing microscope (Olympus, BX53M) (magnification: 100x), in the same manner as in Example 1. From Figure 10, it can be confirmed that a geometric phase lens with an end region pitch of about 1.67 to 1.76 μm or so has been formed through efficient orientation.

**Comparative Example 1**

An alignment film was formed in the same manner as in Example 3 on the same isotropic alkali-free glass (thickness: about 0.7 mm) as in Example 1 as a substrate.

Subsequently, a liquid crystal layer was formed on the alignment film. As the coating liquid applied to form the liquid crystal layer, a coating liquid (Merck, M2032) containing an H-shaped reverse dispersion reactive liquid crystal compound (H-shaped reactive mesogen) obtained from Merck was used. The coating liquid was coated on the alignment film to a thickness of about 0.9 μm in a bar coating manner, maintained at about 100°C for 2 minutes or so, and then cooled (in the vicinity of about 40°C) to orient the liquid crystal compound. Figure 11 is the results of confirming the orientation through a polarizing microscope (Olympus, BX53M) (magnification: 100x). From Figure 11, it can be confirmed that when the H-shaped reverse dispersion reactive liquid crystal compound (H-shaped reactive mesogen) has been applied, the orientation has not been effectively achieved.

**Comparative Example 2**

The same process as Comparative Example 2 was performed except that the coating thickness was adjusted to about 0.6 μm or so. Figure 12 is the results of confirming the orientation through a polarizing microscope. From Figure 12, it can be confirmed that when the H-shaped reverse dispersion reactive liquid crystal compound (H-shaped reactive mesogen) has been applied, the orientation has not been effectively achieved even if the thickness has been further lowered.

**Comparative Example 3**

As a substrate, the same isotropic alkali-free glass (thickness: about 0.7 mm) as in Example 1 was used. An alignment film was formed on the substrate in the same manner as in Example 1, but the alignment film was allowed to form a geometric phase grating with a pitch of about 2.5 μm or so.

After the coating liquid applied in Comparative Example 1 was coated on the alignment film to a thickness of about 0.6 μm in a bar coating manner, and then maintained at about 100°C for 2 minutes or so, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a primary liquid crystal layer (primary process). As a result of confirming the orientation of the liquid crystal compound in the primary process, it could be confirmed that the orientation of the liquid crystal compound was achieved in the primary process. Subsequently, the coating liquid was further coated to a thickness of about 0.6 μm or so on the primary liquid crystal layer in the same manner as the primary process, and the orientation was confirmed after the orientation treatment. Figure 13 is the results, and in this case, it can be confirmed that the orientation of the liquid crystal compound has not been effectively achieved.

## Comparative Example 4

The same isotropic alkali-free glass (thickness: about 0.7 mm) as in Example 1 was used as a substrate, and an alignment film was formed in the same manner as in Comparative Example 3.

After the coating liquid applied in Comparative Example 1 was coated on the alignment film to a thickness of about 1.2 μm or so in a bar coating manner, and then maintained at about 100°C for 2 minutes or so, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a liquid crystal layer. The results of confirming the orientation of the liquid crystal compound in the above process are as shown in Figure 14, and in this case, it can be confirmed that the orientation of the liquid crystal compound has not been effectively achieved.

## Comparative Example 5

The same isotropic alkali-free glass (thickness: about 0.7 mm) as in Example 1 was used as a substrate, and an alignment film was formed in the same manner as in Example 1.

After the coating liquid applied in Comparative Example 1 was coated on the alignment film to a thickness of about 1.6 μm or so in a bar coating manner, and then maintained at about 100°C for 2 minutes or so, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a liquid crystal layer. The results of confirming the orientation of the liquid crystal compound in the above process are as shown in Figure 15, and in this case, it can be confirmed that the orientation of the liquid crystal compound has not been effectively achieved.

## Comparative Example 6

The same isotropic alkali-free glass (thickness: about 0.7 mm) as in Example 1 was used as a substrate, and an alignment film was formed in the same manner as in Example 1.

After the coating liquid applied in Comparative Example 1 was coated on the alignment film to a thickness of about 1.2 μm or so in a bar coating manner, and then maintained at about 100°C for 2 minutes or so, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a liquid crystal layer. The results of confirming the orientation of the liquid crystal compound in the above process are as shown in Figure 16, and in this case, it can be confirmed that the orientation of the liquid crystal compound has not been effectively achieved.

## Comparative Example 7

As a substrate, the same isotropic alkali-free glass (thickness: about 0.7 mm) as in Example 1 was used. An alignment film was formed on the substrate in the same manner as in Example 1, but the alignment layer was formed to form a geometric phase grating with a pitch of about 2.5 μm or so. After the coating liquid B of Preparation Example 2 was coated on the alignment film to a thickness of about 1.2 μm or so in the same manner as in Example 3, and then maintained at about 100°C for about 2 minutes, it was cooled (in the vicinity of about 40°C) to orient the liquid crystal compound, and irradiated with ultraviolet rays in a light quantity of about 100 $mJ/cm^2$ by means of Fusion UV system under a nitrogen atmosphere to form a liquid crystal layer. The results of confirming the orientation of the liquid crystal compound in the above process are as shown in Figure 17, and in this case, it can be confirmed that the orientation of the liquid crystal compound has not been effectively achieved.

## Comparative Example 8

An alignment film was formed on a substrate in the same manner as Example 1. After the coating liquid A of Preparation Example 1 was coated on the alignment film in the same manner as in Example 1, and then maintained at about 100°C for 2 minutes or so, it was cooled (in the vicinity of about 40°C) to orient the liquid crystal compound, and then irradiated ultraviolet rays in a light quantity of about 100 $mJ/cm^2$ by means of Fusion UV system under a nitrogen atmosphere to form a liquid crystal layer (geometric phase grating) with a thickness of about 1.6 μm or so. Figure 18 is the results of confirming the orientation of the liquid crystal compound, and from Figure 18, it can be confirmed that a geometric phase grating with a pitch of about 14.96 μm or so has been formed through efficient orientation.

## Comparative Example 9

An alignment film was formed on a substrate in the same manner as in Example 1. After the coating liquid A of

Preparation Example 1 was coated on the alignment film in the same manner as in Example 1, and then maintained at about 100°C for 2 minutes or so, it was cooled (in the vicinity of about 40°C) to orient the liquid crystal compound, and then irradiated with ultraviolet rays in a light quantity of about 100 mJ/cm$^2$ by means of Fusion UV system under a nitrogen atmosphere to form a liquid crystal layer (geometric phase grating) with a thickness of about 2.4 μm or so. Figure 19 is the results of confirming the orientation of the liquid crystal compound, and from Figure 19, it can be confirmed that a geometric phase grating with a pitch of about 15.40 μm has been formed through efficient alignment.

**Comparative Example 10**

An alignment film was formed on a substrate in the same manner as in Example 1. After the coating liquid A of Preparation Example 1 was coated on the alignment film in the same manner as in Example 1, and then maintained at about 100°C for 2 minutes or so, it was cooled (in the vicinity of about 40°C) to orient the liquid crystal compound, and then irradiated with ultraviolet rays in a light quantity of about 100 mJ/cm$^2$ by means of Fusion UV system under a nitrogen atmosphere to form a liquid crystal layer (geometric phase grating) with a thickness of about 3.1 μm or so. Figure 20 is the results of confirming the orientation of the liquid crystal compound, and from Figure 20, it can be confirmed that a geometric phase grating with a pitch of about 15.40 μm or so has been formed through efficient alignment.

**Test Example 1. Evaluation of R(450)/R(550)**

A sample for evaluation of R(450)/R(550) was prepared in the following manner. A coating liquid for an alignment film (Smaple A-LC, manufactured by Nissan) was bar-coated on an isotropic alkali-free glass (thickness: about 0.7 mm), and dried at about 65°C for 4 minutes or so to form a layer with a thickness of about 2μm or so. Subsequently, the layer was irradiated with ultraviolet rays linearly polarized using a WGP (wire grid polarizer) (Fusion UV system, 100mJ/cm$^2$) to form an alignment film.

The coating liquids of Preparation Examples 1 and 2 were each applied on the alignment layer in the same manner as in Example 1 to form a liquid crystal layer.

For the liquid crystal layer, R(450) and R(550) were each measured using an in-plane phase difference measuring device (Axoscan equipment) to evaluate R(450)/R(550).

As a result of confirmation in the above manner, the R(450)/R(550) of the liquid crystal layer formed with the coating liquid A of Preparation Example 1 was about 0.79, and the R(450)/R(550) of the liquid crystal layer formed with the coating liquid B of Preparation Example 3was about 0.79. In addition, when the coating liquid containing the H-shaped reactive liquid crystal compound obtained from Merck used in Comparative Examples was applied, the R(450)/R(550) was about 0.73 or so.

**Test Example 2. Straight light transmittance spectrum evaluation**

Straight light transmittance spectra of unpolarized light of the optical films of Examples and Comparative Examples were evaluated in the following manner. The liquid crystal layer of the optical film was irradiated with unpolarized light using Ocean Optics' spectrometer (HR4000), and the spectrum was confirmed by evaluating the straight light transmittance.

As in Figure 7, unpolarized light ($L_1$) was irradiated for each wavelength in a direction parallel to the normal direction of the liquid crystal layer (100), and the transmittance of straight light ($L_{E1}$) was evaluated. Upon the transmittance evaluation, the distance between the light (L1)-irradiating light source and the liquid crystal layer (100) was set to 20 mm or so, and the transmittance of the straight light (LE1) at the distance of 100 mm from the liquid crystal layer (100) was measured by a detector with a light-receptive part of 1 mm.

Figures 21 to 23 are the evaluation results for Examples 1 to 3, respectively, and Figures 24 to 26 are the results for Comparative Examples 8 to 10, respectively. The above evaluation was not performed on Comparative Examples 1 to 7 in which the liquid crystal compound was not properly oriented. In Figures 21 to 26, the x-axis represents the wavelength, and the y-axis represents the straight light transmittance.

In Table 1 below, when the above manner has been applied thereto, the straight light transmittance and the straight light intensity for each are summarized and described. In Table 1 below, the transmittance is the straight light transmittance for each reference wavelength, wherein the unit is %, and the intensity is the straight light intensity for each reference wavelength.

[Table 1]

| | Reference wavelength: 450nm | Reference wavelength: 550nm | Reference wavelength: 610nm |
|---|---|---|---|
| | Transmittance (%) | Transmittance (%) | Transmittance (%) |
| Example 1 | 3.1 | 1.4 | 2.4 |
| Example 2 | 3.1 | 1.8 | 1.4 |
| Example 3 | 2.1 | 1.1 | 2.6 |
| Comparative Example 8 | 51.5 | 56.9 | 63.2 |
| Comparative Example 9 | 33.1 | 36.3 | 43.0 |
| Comparative Example 10 | 27.7 | 29.1 | 36.0 |

**Test Example 3. Straight light intensity spectrum evaluation**

Intensity spectra of right-circularly polarized straight light of the optical films of Examples and Comparative Examples were evaluated in the following manner. The liquid crystal layer of the optical film was irradiated with right-circularly polarized light using AxoScan's spectrometer, and the spectrum was confirmed by evaluating the straight light intensity (unit: cd). This method was performed in the same manner as in Test Example 1, except that the irradiated light was changed from unpolarized light to right-circularly polarized light.

Figures 27 to 29 are the evaluation results for Examples 1 to 3, respectively, and Figures 30 to 32 are the results for Comparative Examples 8 to 10, respectively. The above evaluation was not performed on Comparative Examples 1 to 7 in which the liquid crystal compound was not properly oriented. In Figures 27 to 32, the x-axis represents the wavelength, and the y-axis represents the straight light intensity.

In Table 2 below, when the above method has been applied thereto, the straight light transmittance and the straight light intensity for each are summarized and described. In Table 2 below, the transmittance is the straight light transmittance for each reference wavelength, wherein the unit is %, and the intensity is the straight light intensity for each reference wavelength.

[Table 2]

| | Reference wavelength: 450nm | Reference wavelength: 550nm | Reference wavelength: 610nm |
|---|---|---|---|
| | Intensity (cd) | Intensity (cd) | Intensity (cd) |
| Example 1 | 0.02 | 0.005 | 0.018 |
| Example 2 | 0.01 | 0.006 | 0.011 |
| Example 3 | 0.02 | 0.005 | 0.017 |
| Comparative Example 8 | 0.53 | 0.57 | 0.62 |
| Comparative Example 9 | 0.34 | 0.36 | 0.43 |
| Comparative Example 10 | 0.21 | 0.20 | 0.27 |

**Claims**

**1.** An optical film, comprising a liquid crystal layer,

wherein the liquid crystal layer comprises T-shaped liquid crystal compounds,
wherein the T-shaped liquid crystal compounds are aligned in a geometric phase,
wherein the liquid crystal layer satisfies at least one of the conditions of the Equation 1 below and the conditions of the Equation 2 below:

[Equation 1]

$$T_{avg} \leq 5\% \text{ and } SD_T \leq 1.5$$

[Equation 2]

$$I_{avg} \leq 0.1 \text{ cd and } SD_I \leq 0.025$$

wherein the $T_{avg}$ is an average of a $T_B$, a $T_G$ and a $T_R$, $SD_T$ is a standard deviation of the $T_B$, the $T_G$ and the $T_R$, the $T_B$ is a straight light transmittance of unpolarized light having a wavelength of 450 nm with respect to the liquid crystal layer, the $T_G$ is a straight light transmittance of unpolarized light having a wavelength of 550 nm with respect to the liquid crystal layer, and the $T_R$ is a straight light transmittance of unpolarized light having a wavelength of 610 nm with respect to the liquid crystal layer; and the $I_{avg}$ is an average of a $I_B$, a $I_G$ and a $I_R$, the $SD_I$ is a standard deviation of the $I_B$, the $I_G$ and the $I_R$, the $I_B$ is a straight light intensity of circularly polarized light having a wavelength of 450 nm with respect to the liquid crystal layer, the $I_G$ is a straight light intensity of circularly polarized light having a wavelength of 550 nm with respect to the liquid crystal layer, and the $I_R$ is a straight light intensity of circularly polarized light having a wavelength of 610 nm with respect to the liquid crystal layer.

**2.** The optical film according to claim 1, wherein the liquid crystal layer satisfies both the conditions of Equation 1 and the conditions of Equation 2.

**3.** The optical film according to claim 1, wherein the liquid crystal layer satisfies Equation 3 below:

[Equation 3]

$$\Delta F1 \text{ and } \Delta F2 \leq 30\%$$

wherein the $\Delta F1$ is an absolute value of F1 according to Equation 4 below, and the $\Delta F2$ is an absolute value of F2 according to Equation 5 below:

[Equation 4]

$$F1 = 100 \times (\theta_R - \theta_G)/\theta_G$$

[Equation 5]

$$F2 = 100 \times (\theta_B - \theta_G)/\theta_G$$

wherein, the $\theta_R$ is a refraction angle of a region that satisfies Equation 6 below, the $\theta_G$ is a refraction angle of a region that satisfies Equation 7 below, and the $\theta_B$ is a refraction angle of a region that satisfies Equation 8 below.

[Equation 6]

$$\sin\theta_R = 610/\Lambda$$

[Equation 7]

$$\sin\theta_G = 550/\Lambda$$

[Equation 8]

$$\sin\theta_B = 450/\Lambda$$

wherein, the A is a pitch in nm of a geometric phase orientation of the region.

4. The optical film according to claim 1, wherein an orientation of the liquid crystal compound is a geometric phase lens orientation which is oriented to have an azimuth angle changing to satisfy Equation 9 below along at least one plane direction of the liquid crystal layer:

[Equation 9]

$$\theta(r) = \{\pi\times r^2\}/\{2\times f\times\lambda\}$$

wherein, the $\theta(r)$ is an azimuth angle of the liquid crystal compound in a region of the liquid crystal layer spaced apart by a distance r (unit: mm) from the center of the geometric phase lens orientation, the r is the distance, the f is a focal length of the geometric phase lens orientation, and the $\lambda$ is the wavelength of incident light.

5. The optical film according to claim 4, wherein a change of the azimuth angle in the geometric phase lens orientation appears radially.

6. The optical film according to claim 1, wherein the orientation of the liquid crystal compound is a geometric phase grating orientation which is oriented to have an azimuth angle changing along any one plane direction of the liquid crystal layer, and the geometric phase grating orientation has a constant pitch defined by the changing azimuth angle.

7. The optical film according to claim 6, wherein the geometric phase grating orientation is an orientation that the azimuth angle is maintained along a plane direction perpendicular to a direction in which the changing azimuth angle is confirmed.

8. The optical film according to claim 6, wherein the constant pitch defined by the changing azimuth angle is in a range of 0.1 μm to 20 μm.

9. The optical film according to claim 1, wherein the liquid crystal layer has a thickness of 3.5μm or more.

10. The optical film according to claim 1, wherein the T-shaped liquid crystal compound has a ratio (R(450)/R(550)) of an in-plane phase difference (R(450)) for light with a wavelength of 450 nm to an in-plane phase difference (R(550)) for light with a wavelength of 550 nm in a range of 0.6 to 0.99.

11. The optical film according to claim 1, wherein the T-shaped liquid crystal compound is represented by Formula 1 below:

[Formula 1]

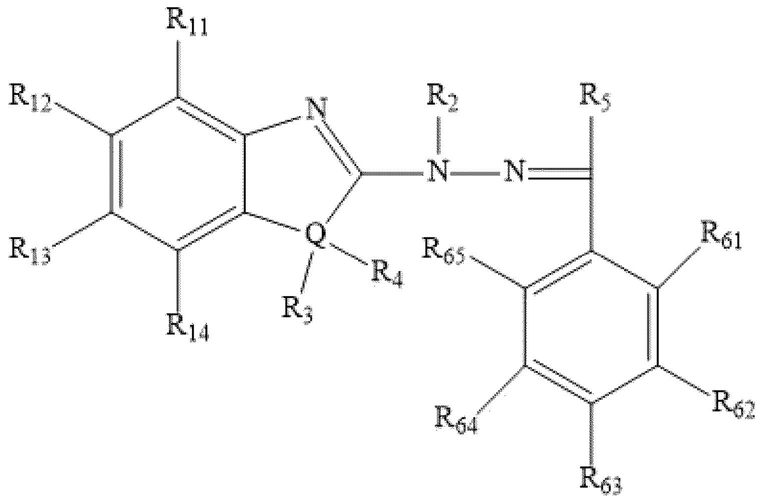

wherein, the Q is a carbon atom or a sulfur atom, and when Q is a sulfur atom, $R_3$ and $R_4$ do not exist,
the $R_{11}$ to the $R_{14}$, and the $R_3$ to the $R_5$ are each independently a hydrogen atom, an alkyl group, an alkoxy group, a cyano group, or a halogen atom,
the $R_2$ is a substituent of Formula 2 or 3 below, and
the $R_{61}$ to the $R_{65}$ are each independently a hydrogen atom, an alkyl group, an alkoxy group, a cyano group, a halogen atom, a substituent of Formula 4 below, or a substituent of Formula 5 below, but two or more of the $R_{61}$ to the $R_{65}$ are a substituent of Formula 4 below, or a substituent of Formula 5 below:

[Formula 2] $-A_1-L_1-Cy-A_2-L_2-P_1$

wherein, the $A_1$ and the $A_2$ are each independently an oxygen atom or a single bond, and the $L_1$ and the $L_2$ are each independently -C(=O)-O-, -O-C(=O)-, an alkylene group, or an alkylidene group, the Cy is an arylene group or a cycloalkylene group, and the $P_1$ is a hydrogen atom, an alkyl group, an aryl group, an acryloyl group, a methacryloyl group, an acryloyloxy group, or a methacryloyloxy group:

[Formula 3]

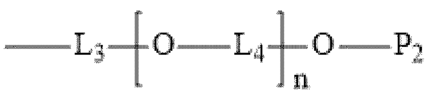

wherein, the $L_3$ and the $L_4$ are each independently an alkylene group or an alkylidene group, the $P_2$ is a hydrogen atom, an alkyl group, an aryl group, an acryloyl group, or a methacryloyl group, and n is a number in a range of 1 to 10:

[Formula 4] $-A_3-L_5-Cy-A_4-L_6-P_3$

wherein, the $A_3$ and the $A_4$ are each independently an oxygen atom, an alkylene group, an alkylidene group, or a single bond, the $L_5$ and the $L_6$ are each independently - C(=O)-O-, -O-C(=O)-, an alkylene group or an alkylidene group, the Cy is an arylene group or a cycloalkylene group, and the $P_3$ is a hydrogen atom, an alkyl group, an aryl group, an acryloyl group, a methacryloyl group, an acryloyloxy group, or a methacryloyloxy group:

[Formula 5]

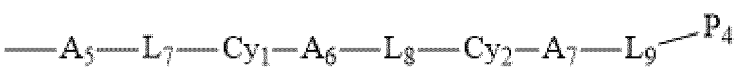

wherein, the $A_5$, the $A_6$ and the $A_7$ are each independently an oxygen atom or a single bond, the $L_7$, the $L_8$ and the $L_9$ are each independently -C(=O)-O-, -O-C(=O)-, an alkylidene group or an alkylene group, any one of the Cy1 and the Cy2 is a cycloalkylene group, and the other is an arylene group, and the $P_4$ is a hydrogen atom, an alkyl group, an aryl group, an acryloyl group, a methacryloyl group, an acryloyloxy group, or a methacryloyloxy group.

**12.** The optical film according to claim 11, wherein the liquid crystal layer comprises, as the T-shaped liquid crystal compound, a compound in which $R_2$ of Formula 1 is a substituent of Formula 2, in which $P_1$ is a hydrogen atom, an alkyl group or an aryl group, or a substituent of Formula 3, in which $P_2$ is a hydrogen atom, an alkyl group or an aryl group; and a compound in which $R_2$ of Formula 1 is a substituent of Formula 2, in which $P_1$ is an acryloyl group, a methacryloyl group, an acryloyloxy group or a methacryloyloxy group, or a substituent of Formula 3, in which $P_2$ is an acryloyl group or a methacryloyl group.

**13.** A method for manufacturing an optical film, comprising:

forming a layer of a material comprising liquid crystal compounds on a liquid crystal orientation surface, and orienting the liquid crystal compounds in a geometric phase to form a liquid crystal layer,
wherein the liquid crystal compounds are T-shaped liquid crystal compounds, and
wherein the layer of the material comprising the liquid crystal compounds or the liquid crystal layer is formed so as to have a thickness satisfying Equation 10 below:

[Equation 10]

$$T/P \leq 0.45$$

wherein, the T is the thickness of the liquid crystal layer or the layer of the material comprising the liquid crystal compound, and the P is a pitch of the geometric phase orientation.

**14.** A method for manufacturing an optical film, comprising:

forming a layer of a material comprising liquid crystal compounds on a liquid crystal orientation surface, and orienting the liquid crystal compounds in a geometric phase to form a liquid crystal layer,
the method, comprising:

a first step of forming the layer of the material comprising the liquid crystal compounds on the liquid crystal orientation surface, and orienting the material to form a first sub-liquid crystal layer; and
a second step of forming the layer of the material comprising the liquid crystal compounds on the first sub-liquid crystal layer, and orienting the material to form a second sub-liquid crystal layer,
wherein the liquid crystal compounds are T-shaped liquid crystal compounds, and
wherein the layer of the material comprising the liquid crystal compound or the sub-liquid crystal layers are formed to have a thickness satisfying Equation 10 below:

[Equation 10]

$$T/P \leq 0.45$$

wherein, the T is the thickness of the sub-liquid crystal layer or the layer of the material comprising the liquid crystal compound, and the P is the pitch of the geometric phase orientation.

**15.** The method according to claim 14, wherein the second step is repeated two or more times.

**16.** An optical device comprising the optical film of any one of claims 1 to 12.

**17.** The optical device according to claim 16, which is a virtual reality display, an augmented reality display, or a mixed reality display, or a part thereof.

Fig. 1

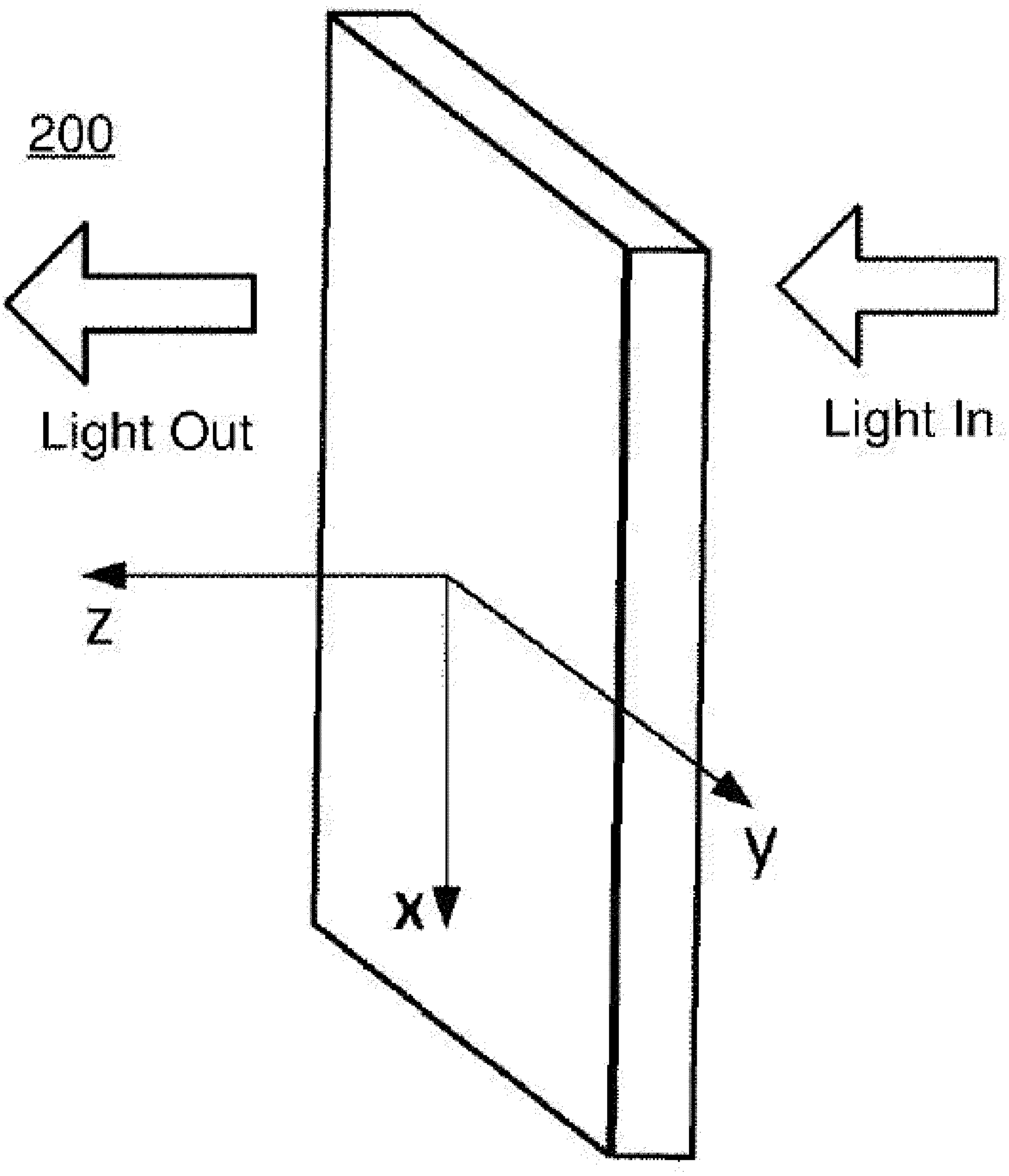

Fig. 2

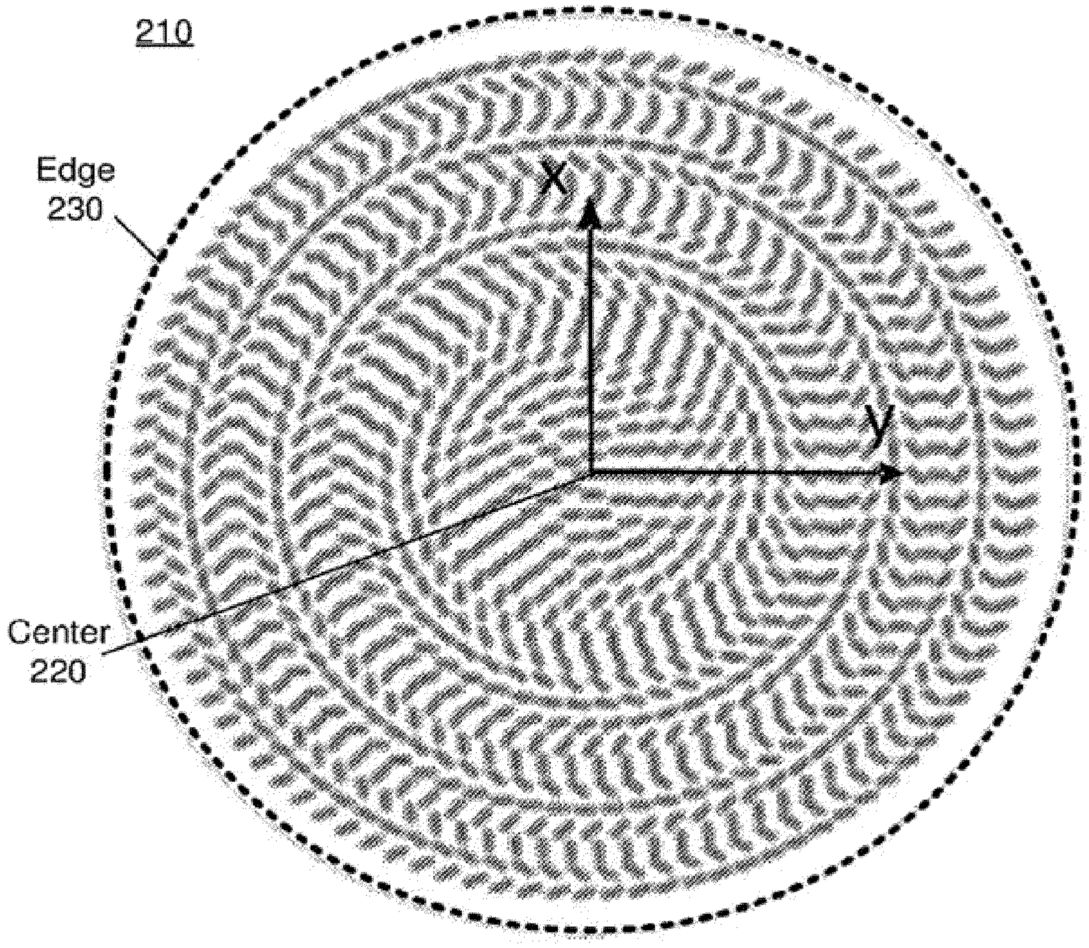

Fig. 3

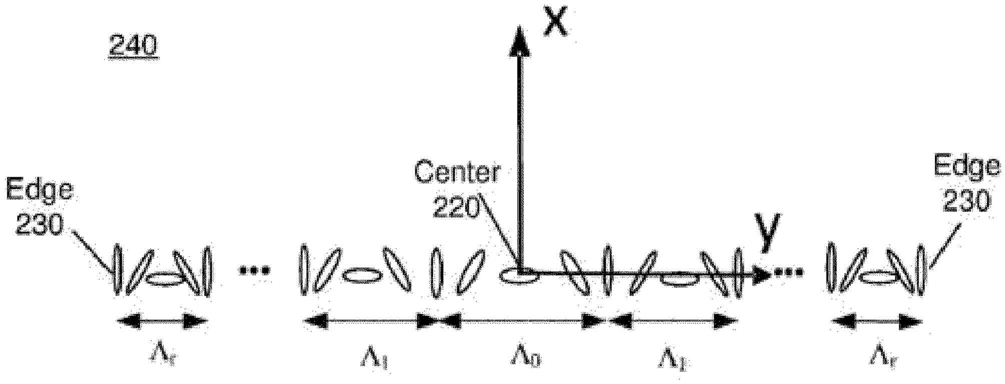

Fig. 4

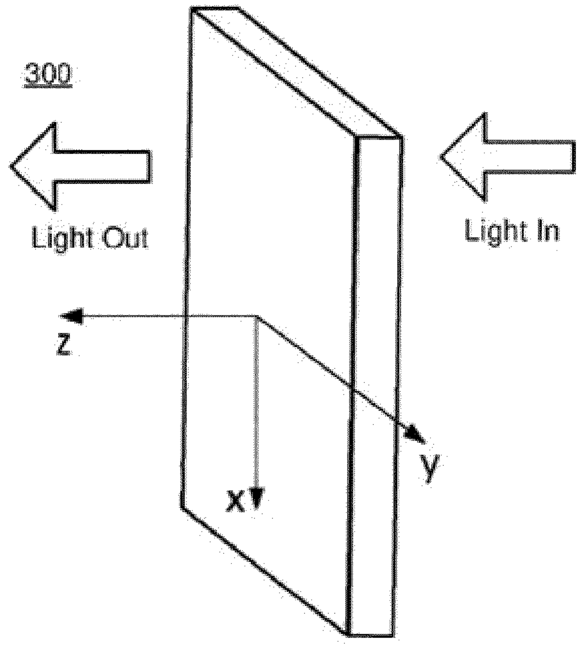

Fig. 5

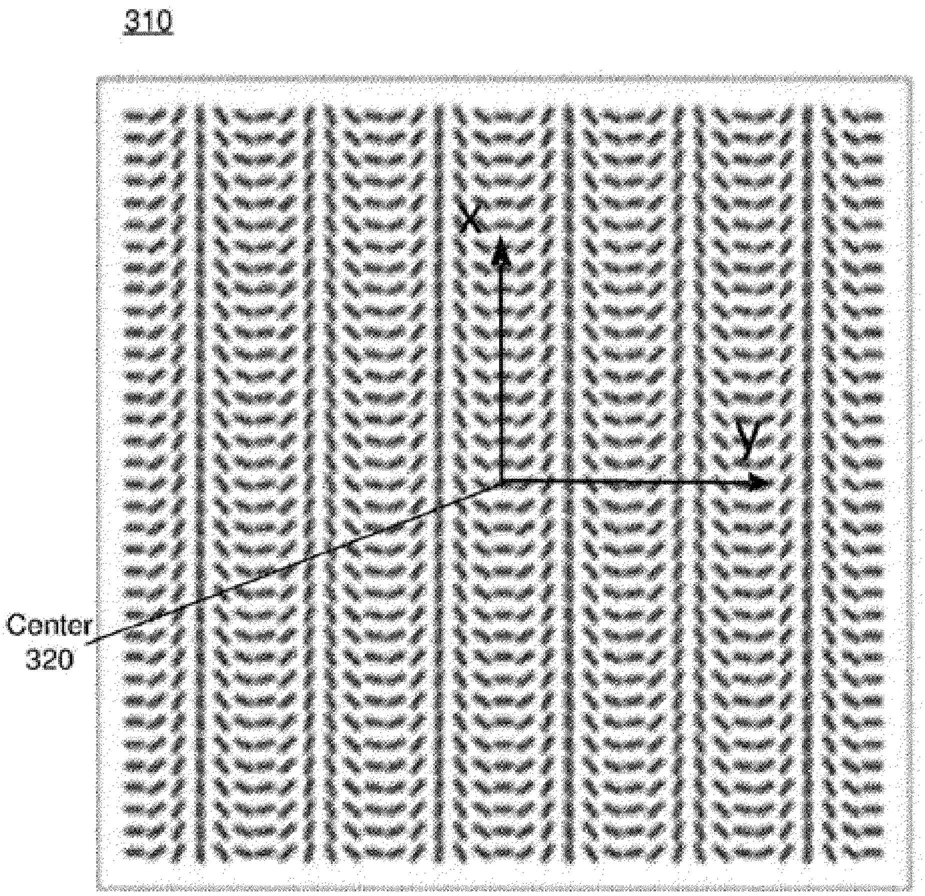

Fig. 6

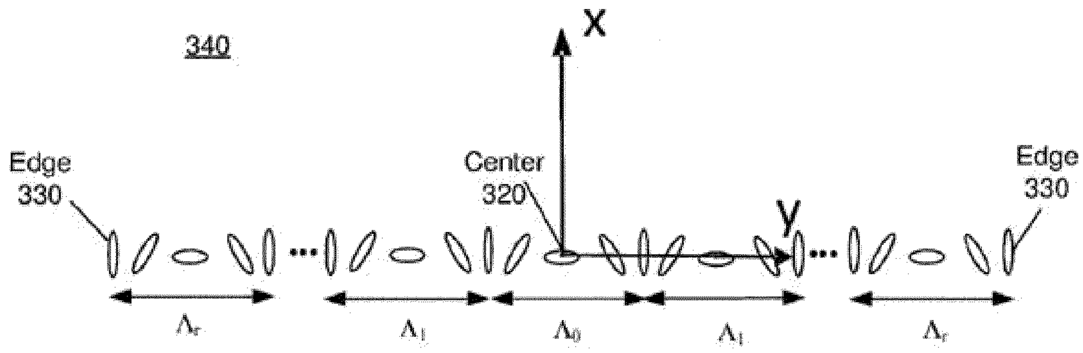
340
X
Edge
330
Center
320
y
Edge
330
$\Lambda_r$
$\Lambda_1$
$\Lambda_0$
$\Lambda_1$
$\Lambda_r$

Fig. 7

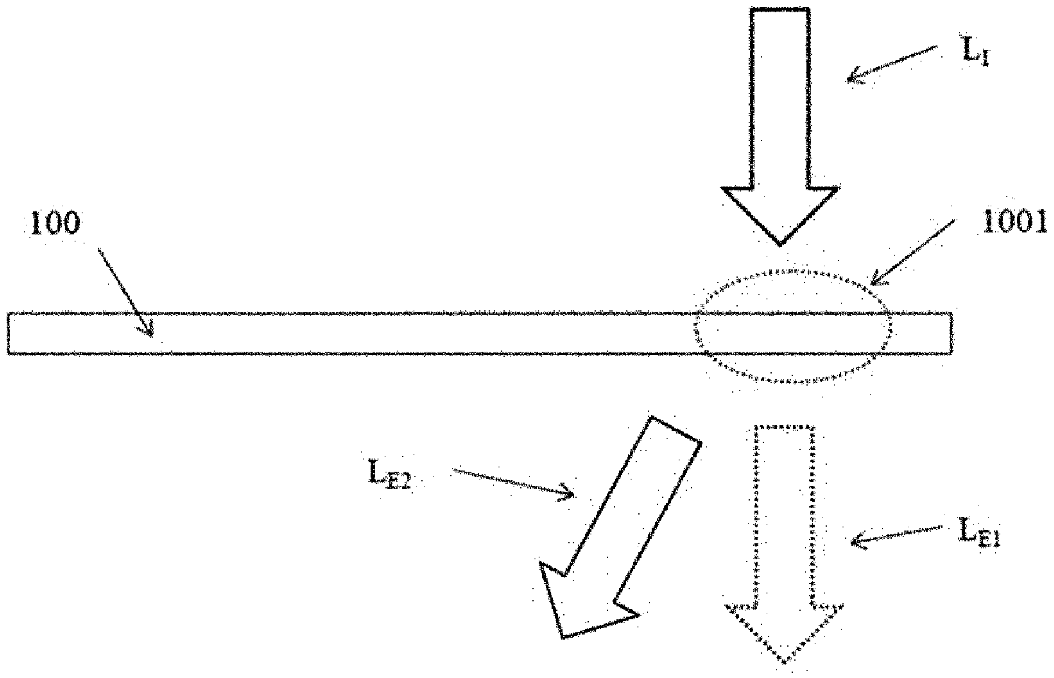

Fig. 8

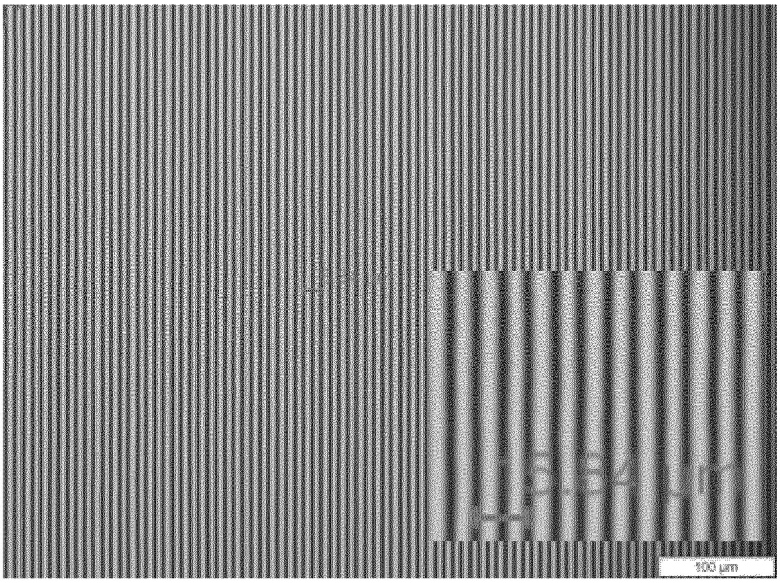

Fig. 9

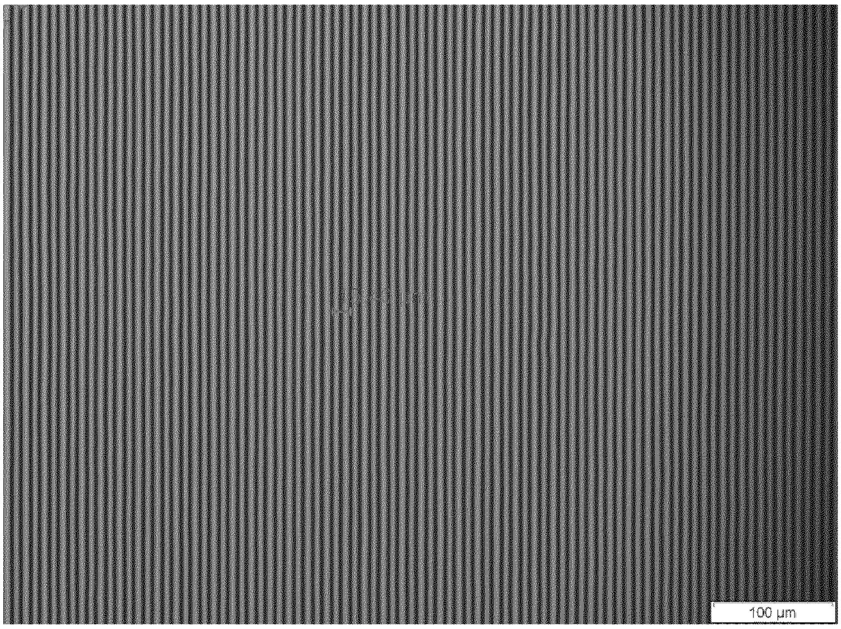

Fig. 10

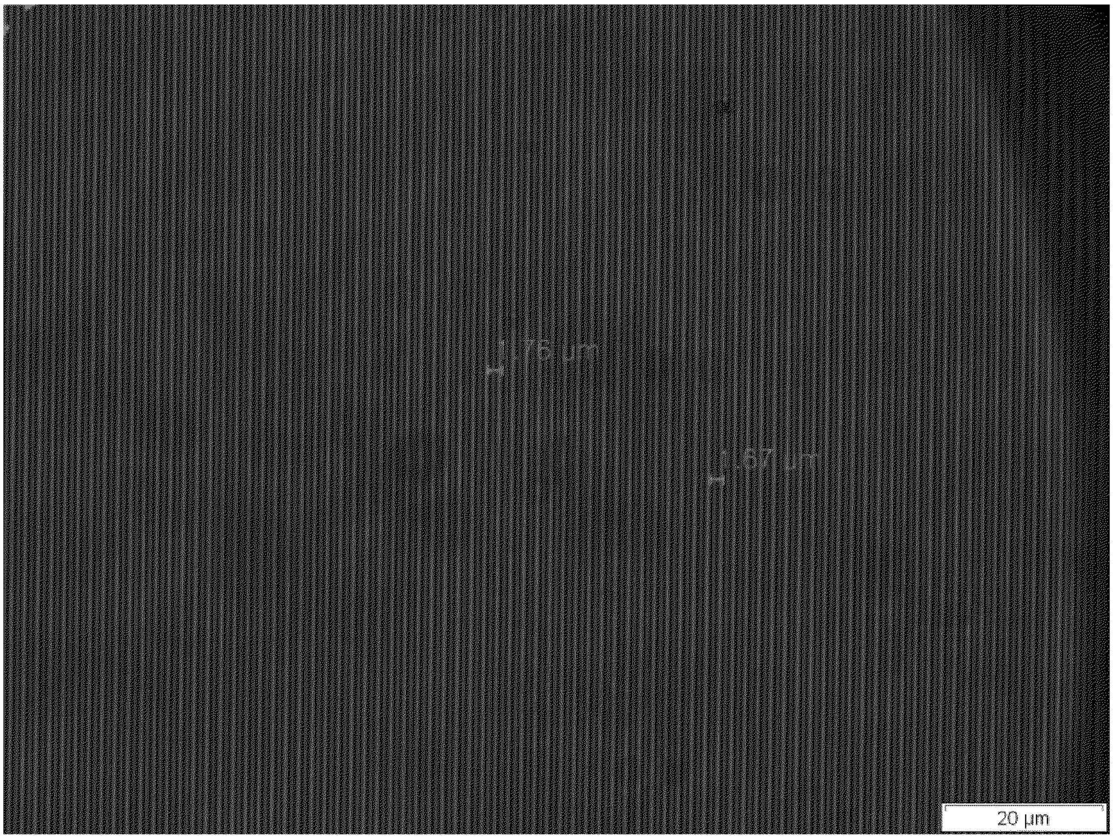

Fig. 11

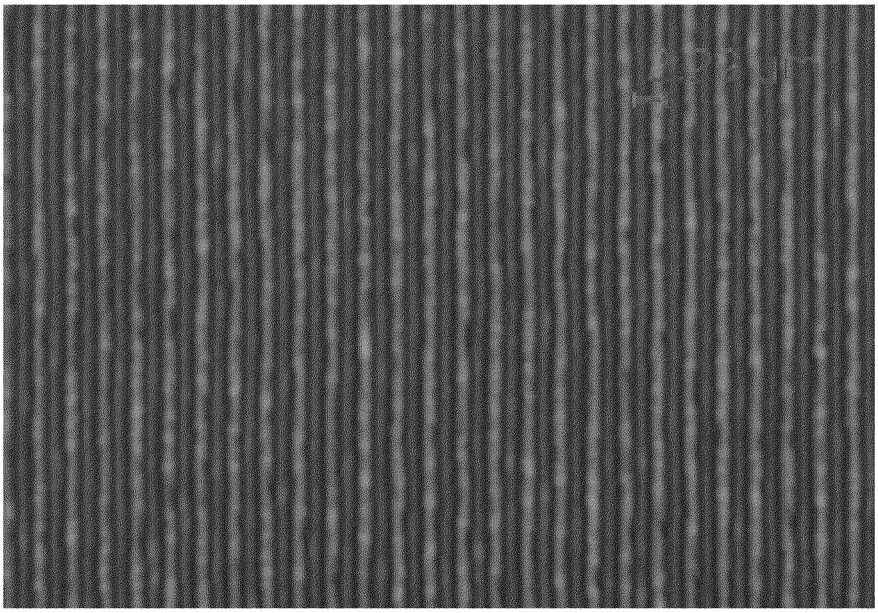

Fig. 12

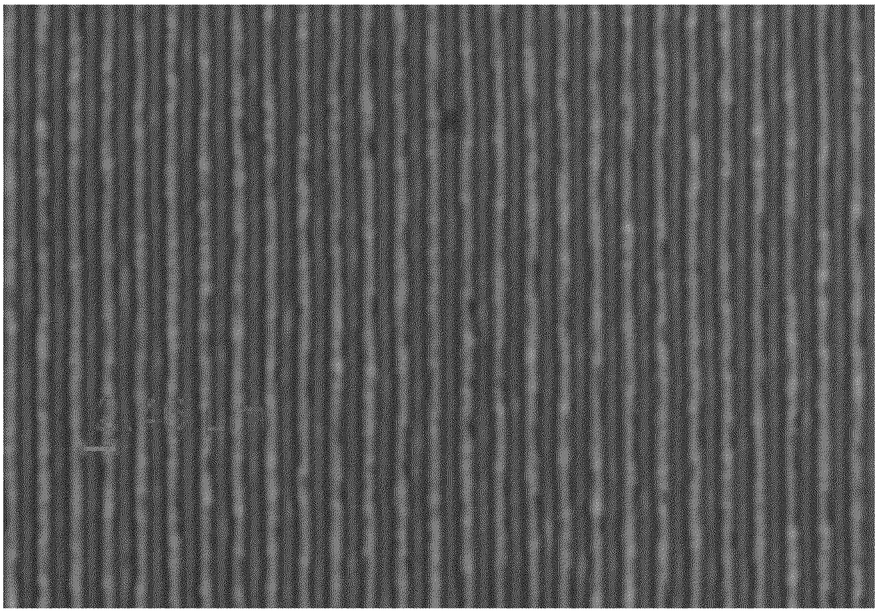

Fig. 13

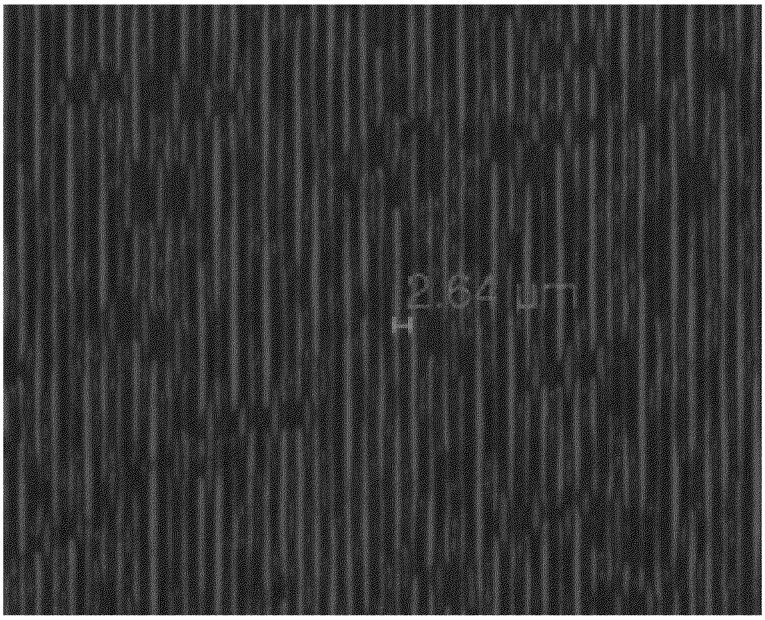

Fig. 14

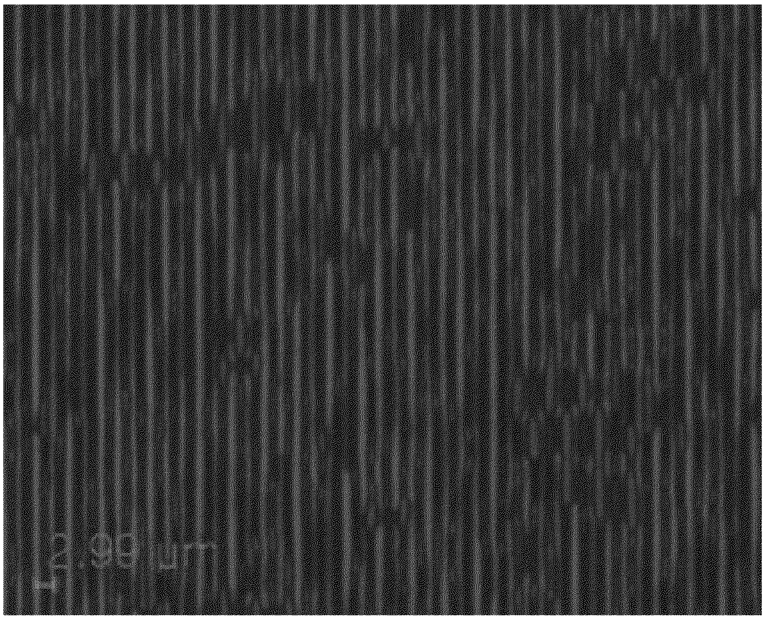

Fig. 15

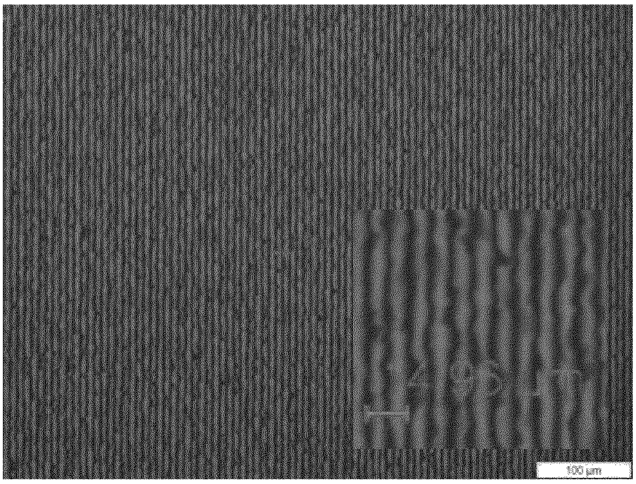

Fig. 16

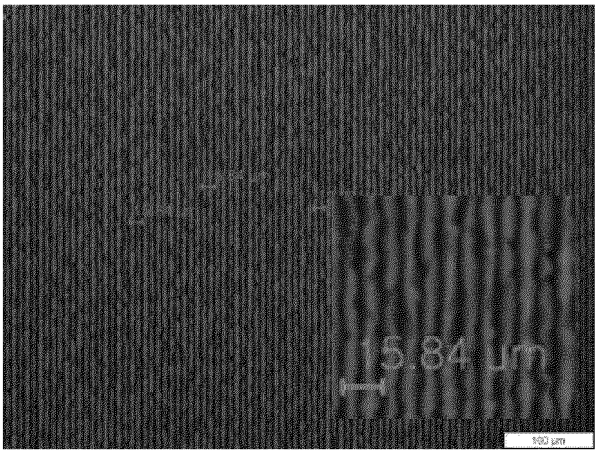

Fig. 17

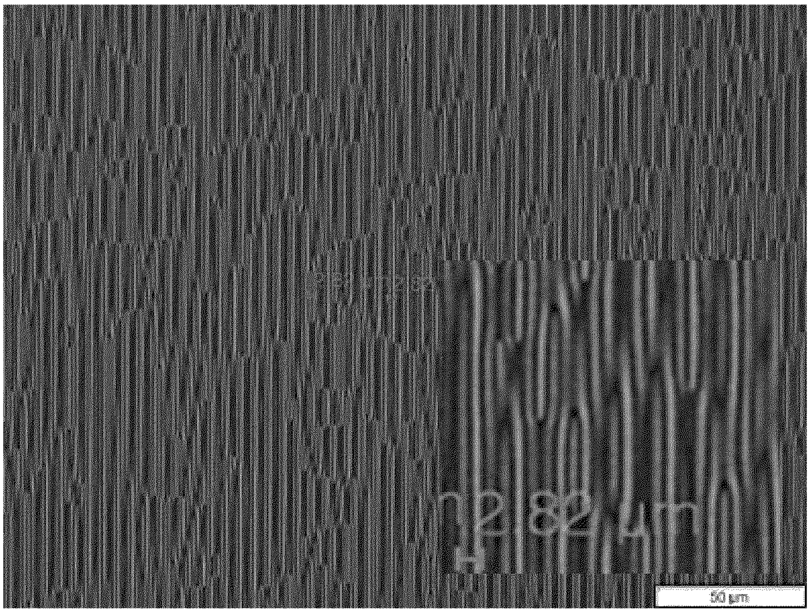

Fig. 18

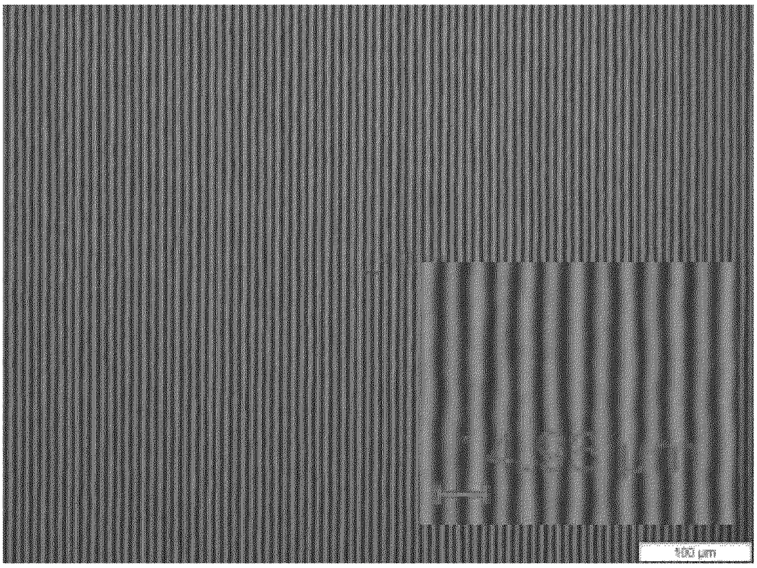

Fig. 19

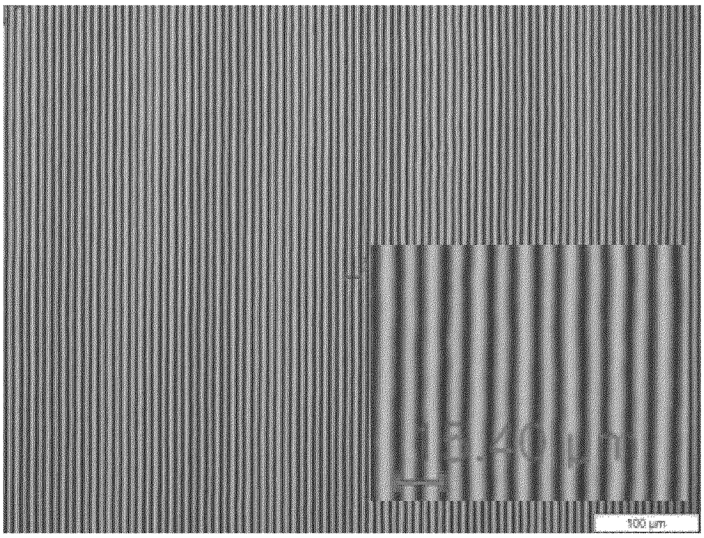

Fig. 20

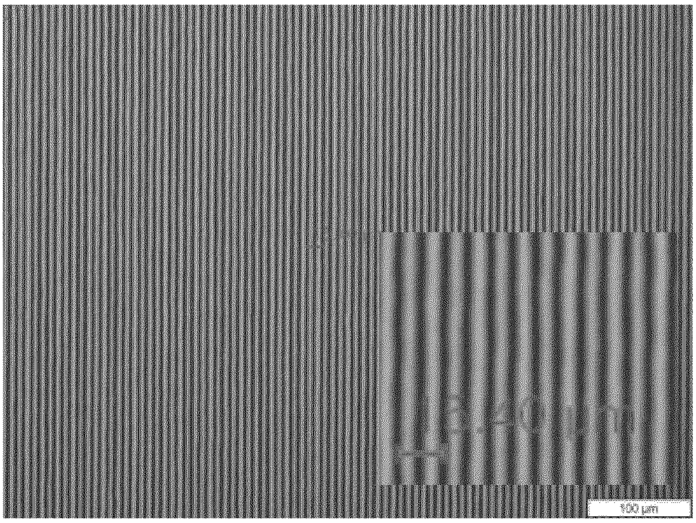

Fig. 21

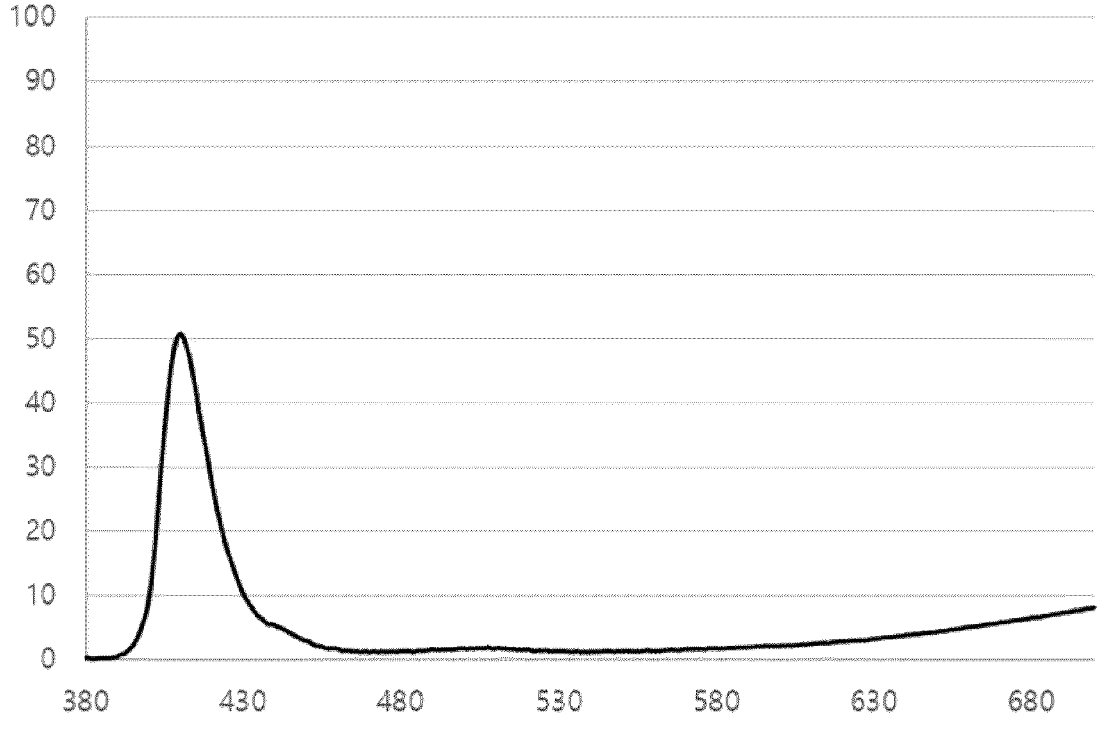

Fig. 22

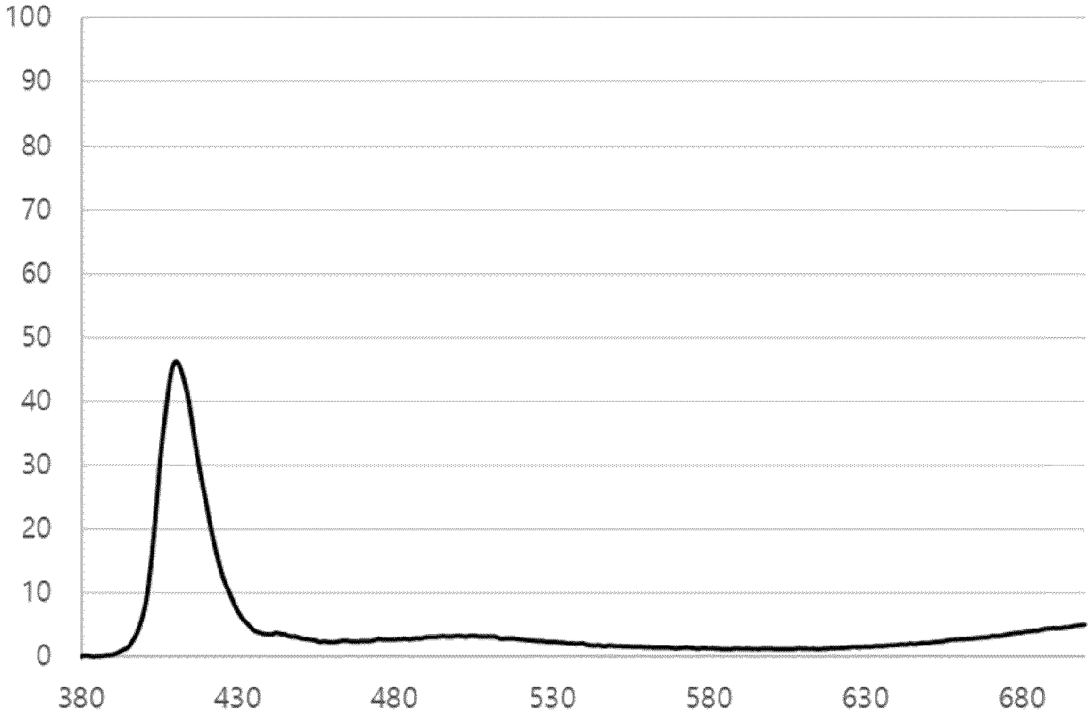

Fig. 23

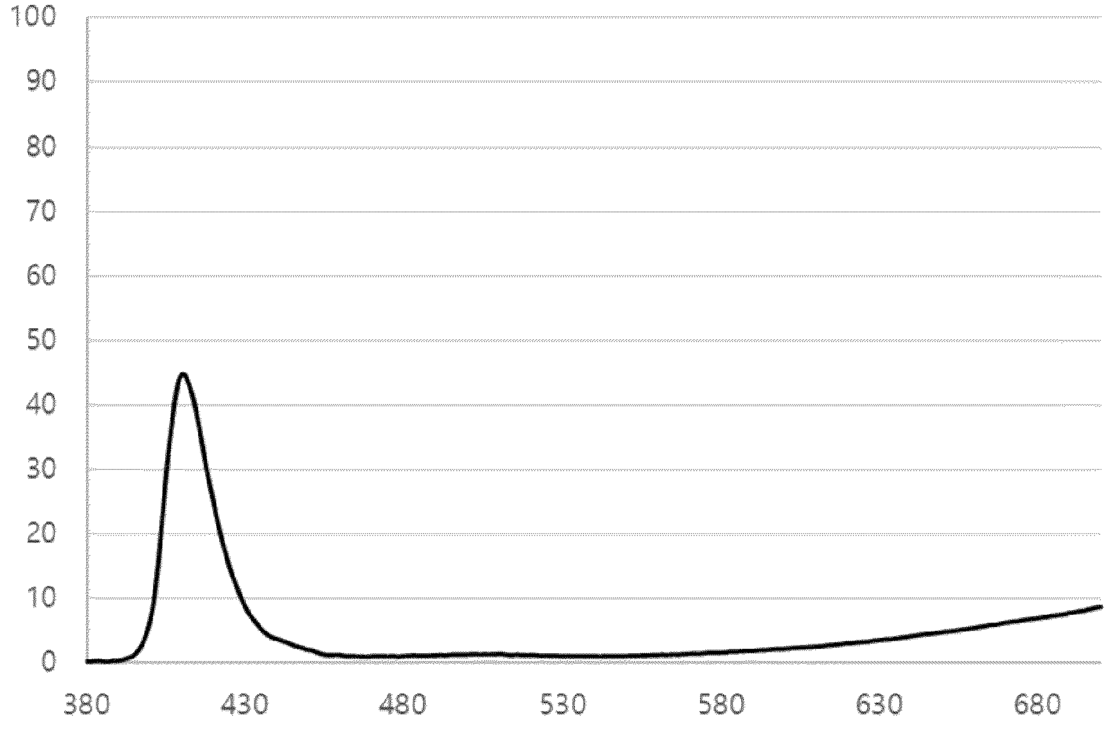

Fig. 24

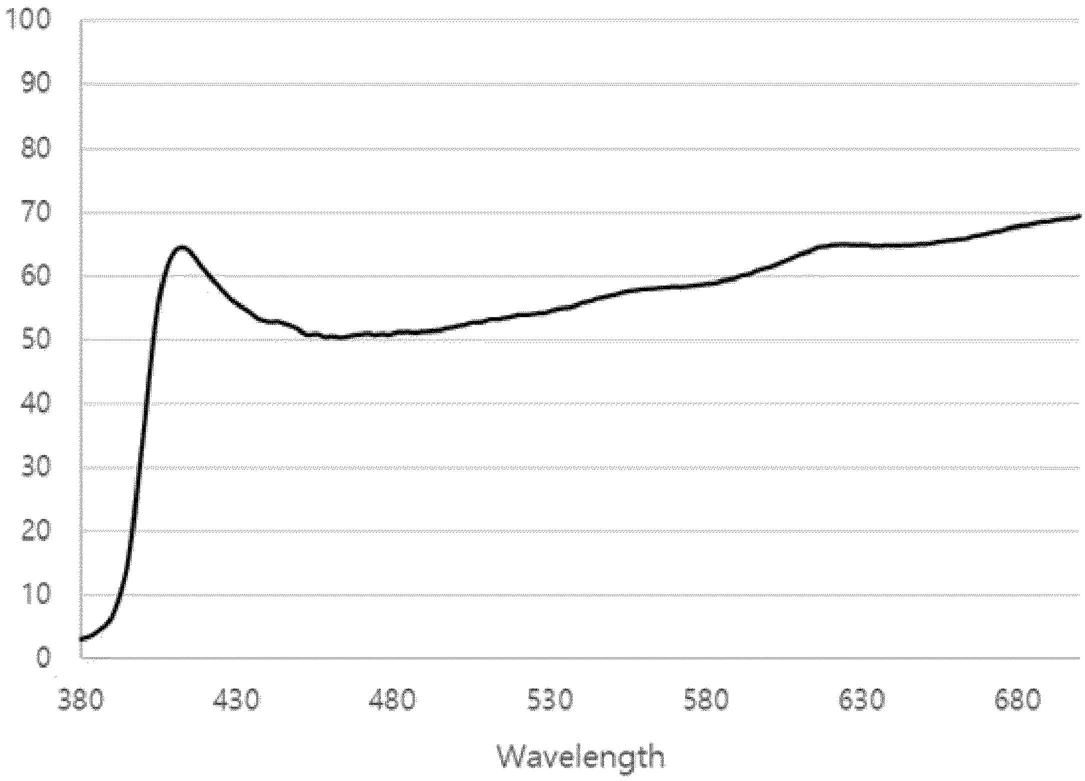
100
90
80
70
60
50
40
30
20
10
0
380
430
480
530
580
630
680
Wavelength

Fig. 25

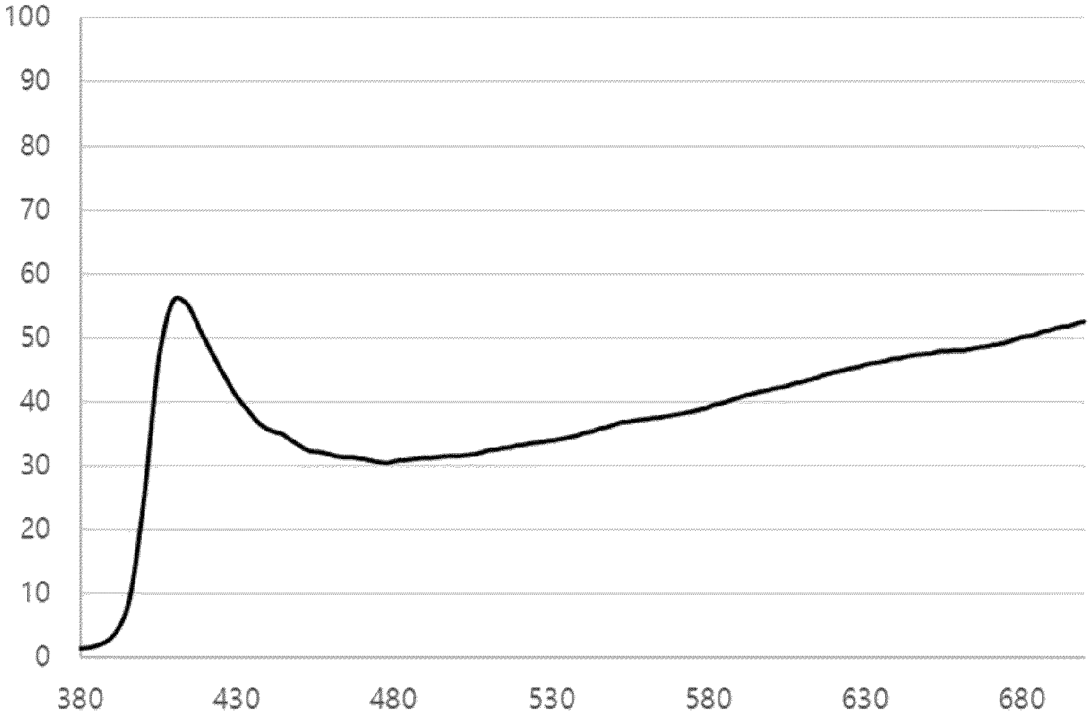

Fig. 26

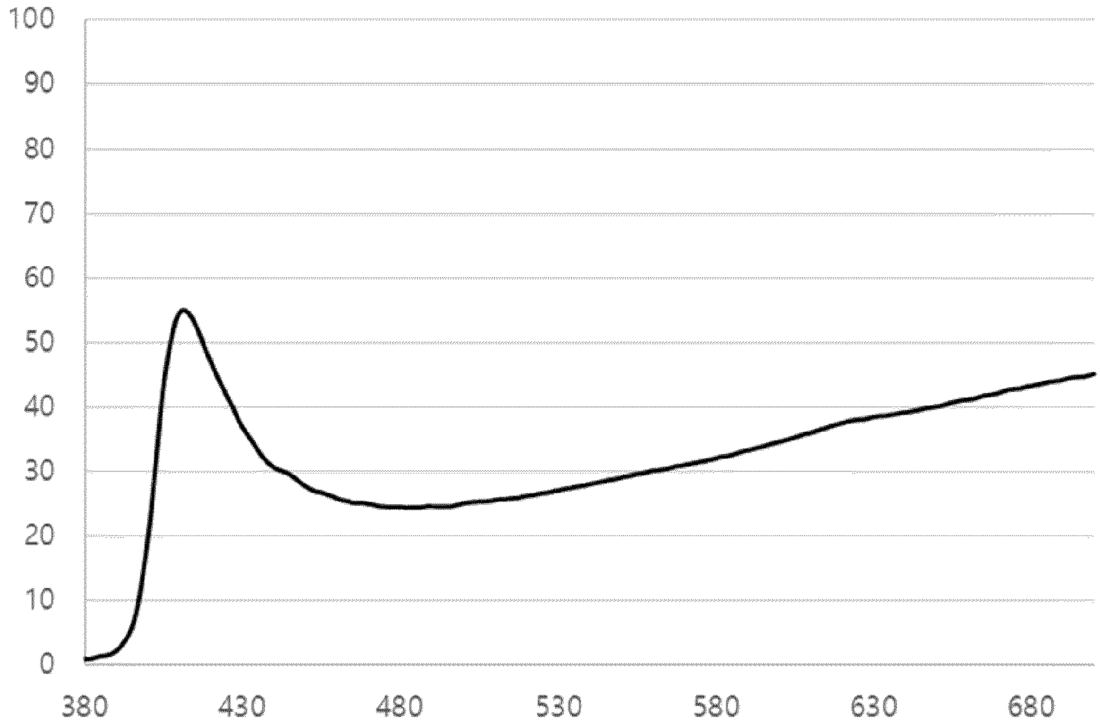

Fig. 27

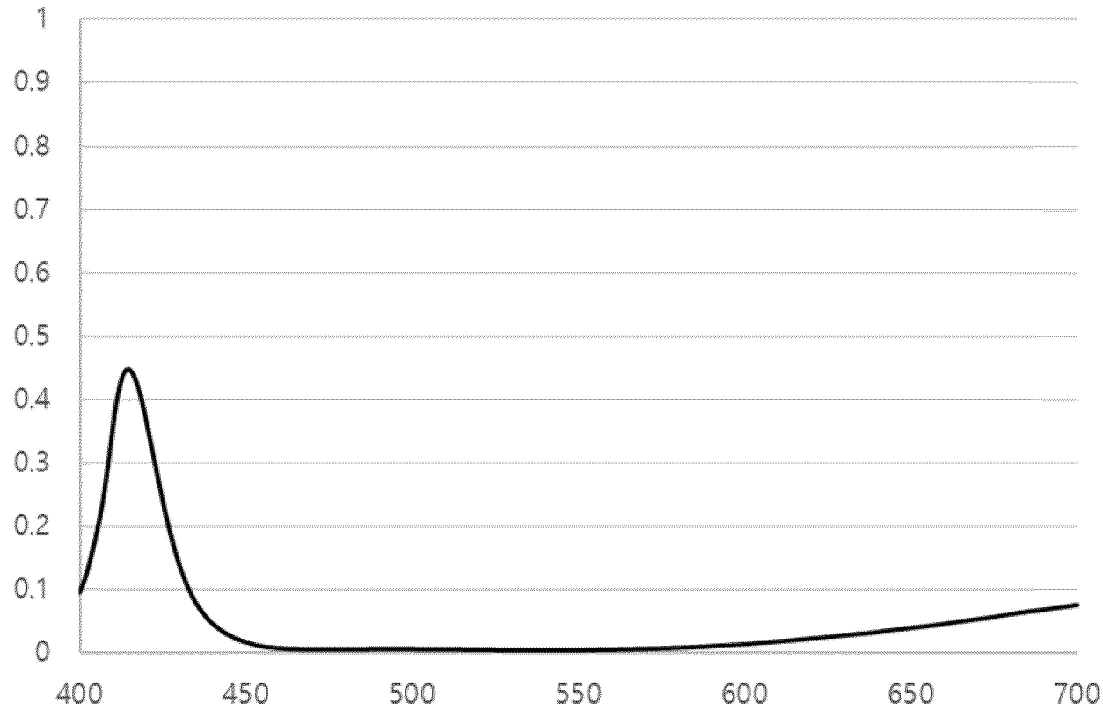

Fig. 28

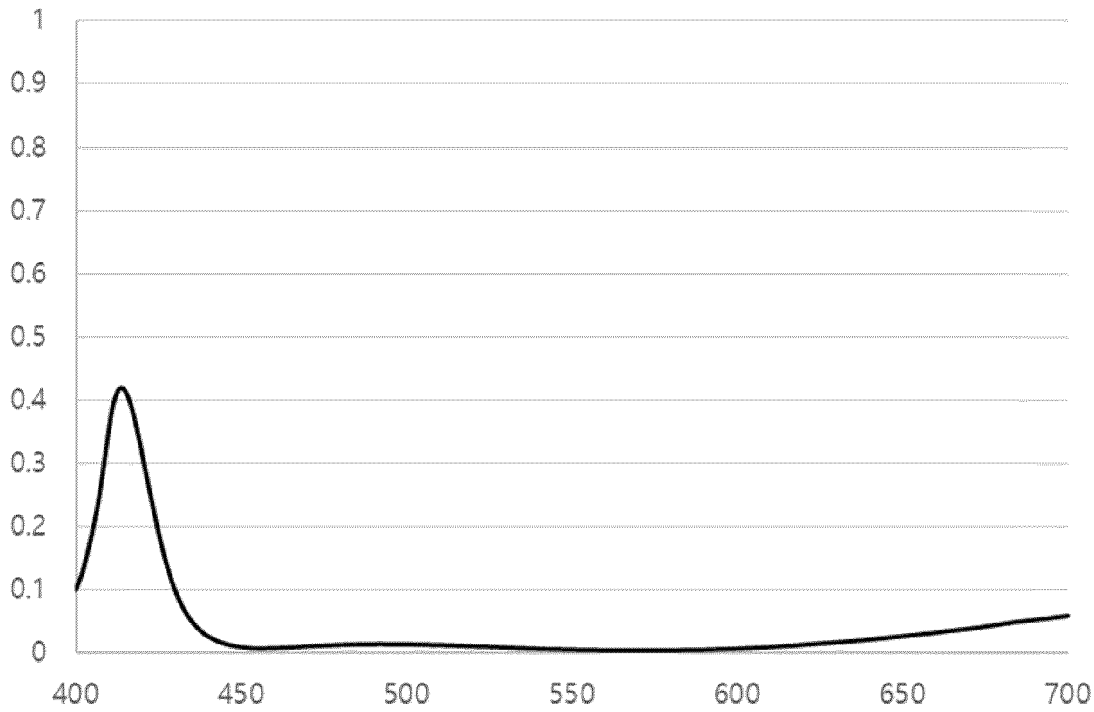

Fig. 29

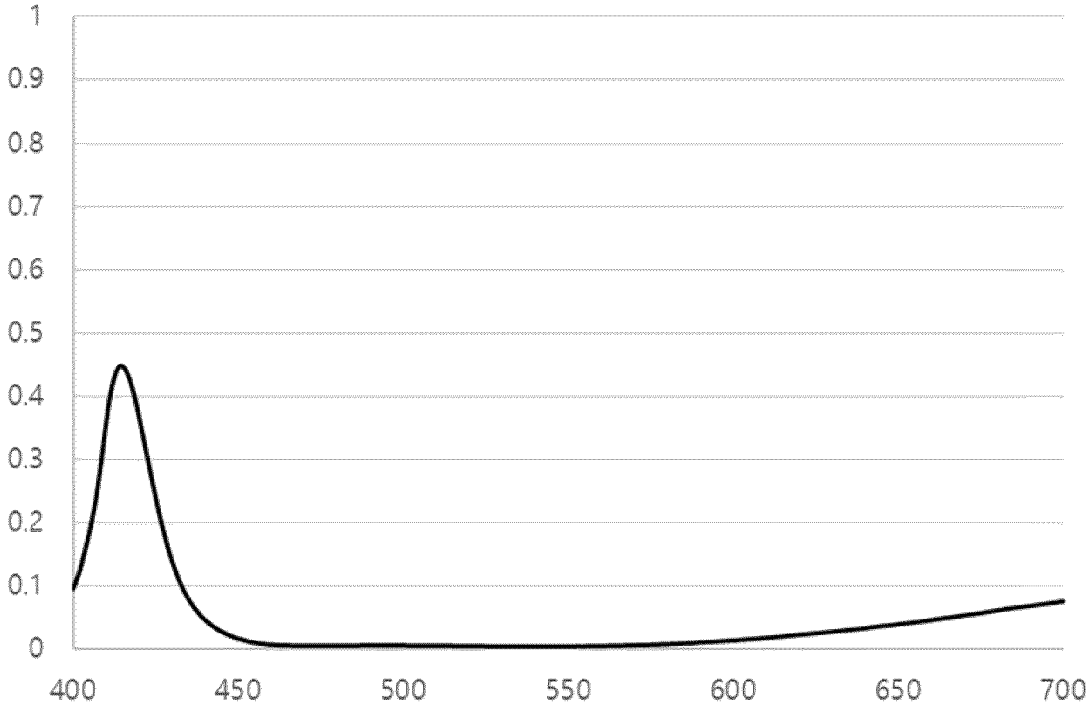

Fig. 30

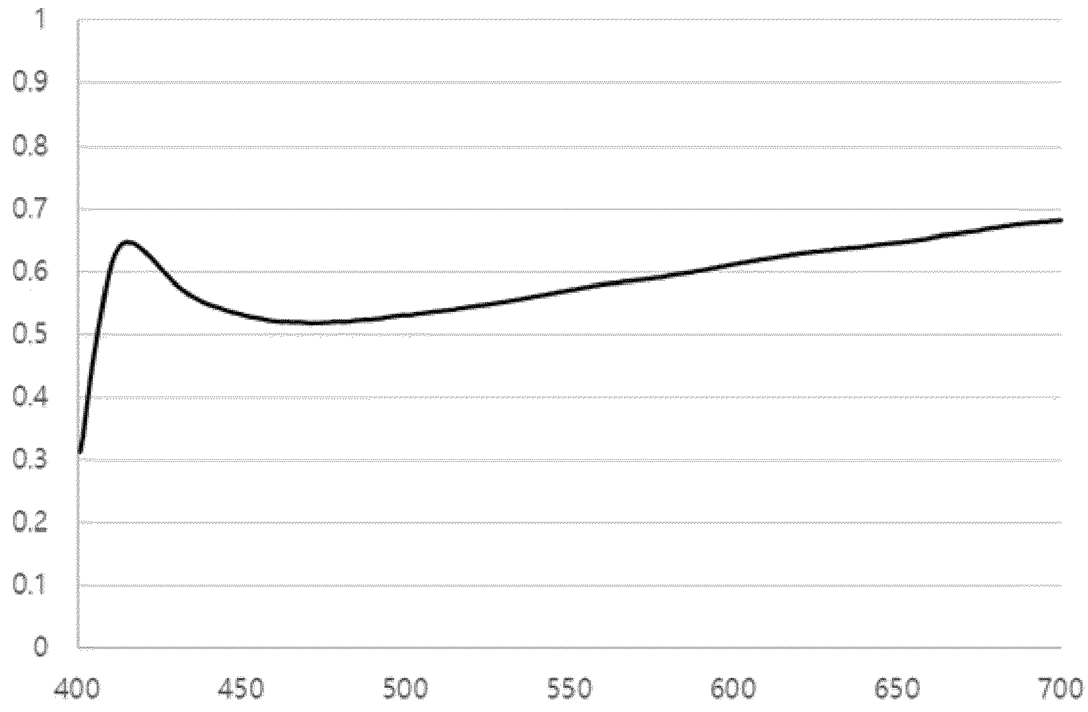

Fig. 31

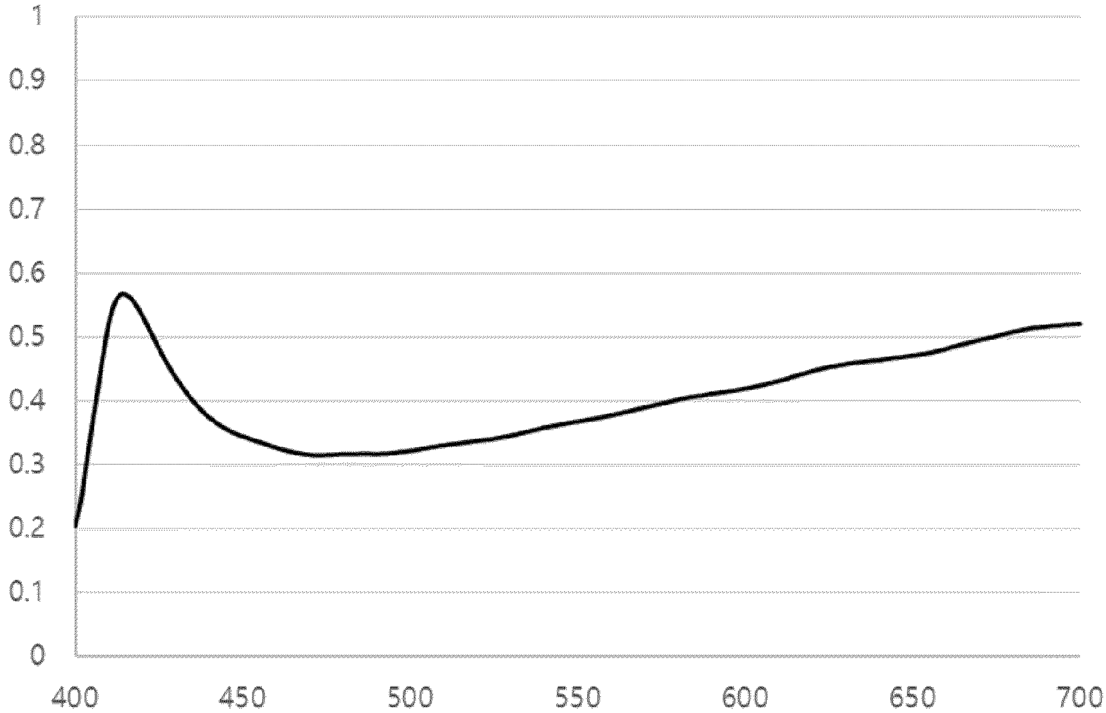

Fig. 32

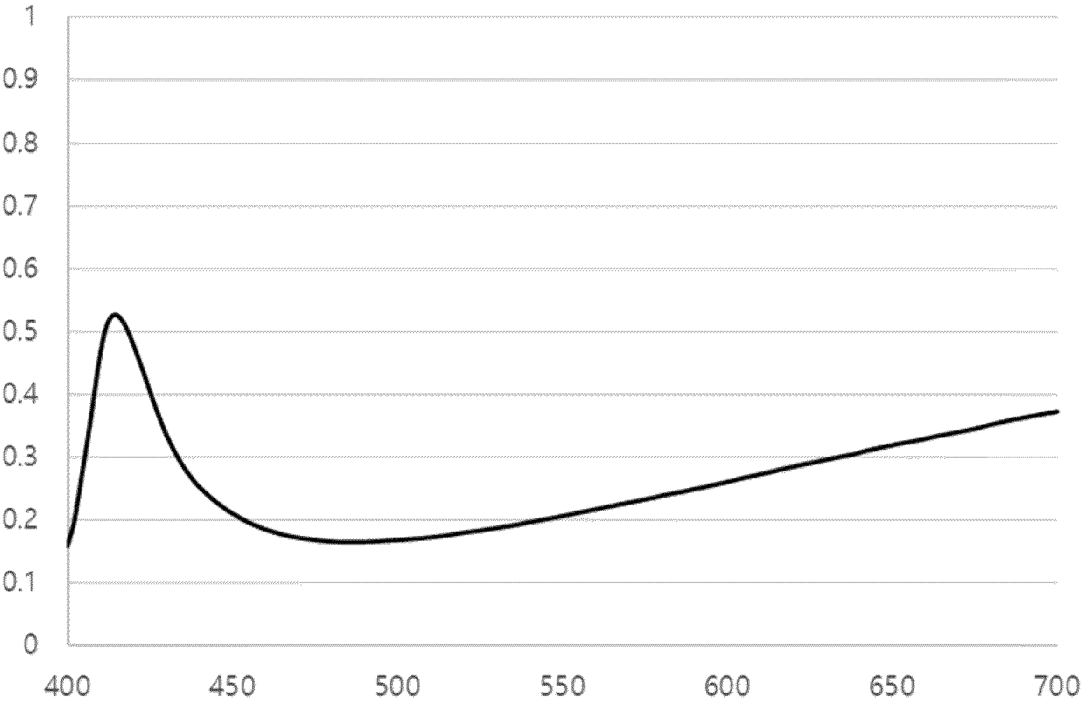

## INTERNATIONAL SEARCH REPORT

International application No. **PCT/KR2023/014543**

**A. CLASSIFICATION OF SUBJECT MATTER**

**G02F 1/1337**(2006.01)i; **G02F 1/13363**(2006.01)i; **G02B 5/18**(2006.01)i; **G02F 1/13**(2006.01)i; **C09K 19/38**(2006.01)i; **C09K 19/42**(2006.01)i; **G02B 27/01**(2006.01)i

According to International Patent Classification (IPC) or to both national classification and IPC

**B. FIELDS SEARCHED**

Minimum documentation searched (classification system followed by classification symbols)

G02F 1/1337(2006.01); C09K 19/38(2006.01); G02B 1/00(2006.01); G02B 5/20(2006.01); G02B 5/30(2006.01); H01L 51/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 액정(liquid crystal), 광학 필름(optical film), 편광(polarization), 파장(wavelength), 기하 위상(geometric phase), 광학 위상차(optical phase difference), 비편광(non-polarized light), 두께(thickness), 피치(pitch)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0006473 A (ELECTRONICS AND TELECOMMUNICATIONS RESEARCH INSTITUTE) 17 January 2022 (2022-01-17)<br>See paragraphs [0013], [0025] and [0047]-[0064]. | 1-17 |
| A | KR 10-2007-0115927 A (DUTCH POLYMER INSTITUTE) 06 December 2007 (2007-12-06)<br>See paragraphs [0013]-[0133]. | 1-17 |
| A | KR 10-2021-0048514 A (SUMITOMO CHEMICAL CO., LTD.) 03 May 2021 (2021-05-03)<br>See paragraphs [0008]-[0027]. | 1-17 |
| A | KR 10-2020-0085018 A (LG CHEM, LTD.) 14 July 2020 (2020-07-14)<br>See paragraphs [0008]-[0112]. | 1-17 |
| A | JP 2016-176984 A (TEIJIN LTD.) 06 October 2016 (2016-10-06)<br>See paragraphs [0009]-[0011]; and claims 1-6. | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **04 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/014543**

| Patent document cited in search report | | | Publication date (day/month/year) | Patent family member(s) | | | Publication date (day/month/year) |
|---|---|---|---|---|---|---|---|
| KR | 10-2022-0006473 | A | 17 January 2022 | None | | | |
| KR | 10-2007-0115927 | A | 06 December 2007 | CN | 101133348 | A | 27 February 2008 |
| | | | | CN | 101133348 | B | 08 September 2010 |
| | | | | CN | 101846811 | A | 29 September 2010 |
| | | | | EP | 1886171 | A2 | 13 February 2008 |
| | | | | EP | 1886171 | B1 | 16 May 2012 |
| | | | | JP | 2008-532085 | A | 14 August 2008 |
| | | | | JP | 5276847 | B2 | 28 August 2013 |
| | | | | KR | 10-1281401 | B1 | 02 July 2013 |
| | | | | US | 2008-0278675 | A1 | 13 November 2008 |
| | | | | US | 2010-0110363 | A1 | 06 May 2010 |
| | | | | US | 2011-0242461 | A1 | 06 October 2011 |
| | | | | US | 2012-0086903 | A1 | 12 April 2012 |
| | | | | US | 7692759 | B2 | 06 April 2010 |
| | | | | US | 8064035 | B2 | 22 November 2011 |
| | | | | WO | 2006-092758 | A2 | 08 September 2006 |
| | | | | WO | 2006-092758 | A3 | 26 April 2007 |
| KR | 10-2021-0048514 | A | 03 May 2021 | CN | 112585513 | A | 30 March 2021 |
| | | | | CN | 112585513 | B | 24 January 2023 |
| | | | | JP | 2020-030336 | A | 27 February 2020 |
| | | | | JP | 7302954 | B2 | 04 July 2023 |
| | | | | TW | 202012165 | A | 01 April 2020 |
| | | | | WO | 2020-039799 | A1 | 27 February 2020 |
| KR | 10-2020-0085018 | A | 14 July 2020 | KR | 10-2466775 | B1 | 14 November 2022 |
| JP | 2016-176984 | A | 06 October 2016 | JP | 6475046 | B2 | 27 February 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220120854
- KR 1020180048837
- KR 1729819
- KR 1640670
- KR 1557202
- KR 1472187
- KR 1460862
- KR REGISTRATIONPATENTNO
- KR 1191124
- KR 1191125
- KR 1191129


### Non-patent literature cited in the description


- **TAO ZHAN et al.** *Adv. Optical Mater*, 2019, 1901360
- *Optics Express*, 2019, vol. 27 (3), 2632-2642